# EUROPEAN PATENT APPLICATION

(11) **EP 4 845 185 A1**
(43) Date of publication of application: **25.11.2026**
(21) Application number: 25742065.3
(22) Date of filing: 13.01.2025
(51) Int. Cl.: H04W 4/029, H04W 76/18, H04W 64/00, H04W 48/18

(54) **LOCATION SERVICE**

(30) Priority: 15.01.2024 US 202463620891 P
(71) Applicant: LG Electronics Inc., Yeongdeungpo-gu Seoul 07336 (KR)
(72) Inventor: KIM, Sunhee, Seoul 06772 (KR)
(74) Representative: Jung, Minkyu
(86) International application number: PCT/KR2025/000721
(87) International publication number: WO 2025/155049

(57) **Abstract**

One disclosure of the present specification provides a method. The method may comprise the steps of: receiving a message including information related to user plane connection and an address related to a first network entity; transmitting the message to a UE; receiving, from the UE, a UL NAS TRANSFER message including a rejection cause; transmitting, to the first network entity, a notification message including the rejection cause; transmitting an analysis request message to a second network entity related to analysis; and receiving an analysis response message from the second network entity.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 130 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

A location service for a terminal may be supported. However, according to the related art, there may be a problem that a location service based on a user plane may not be effectively supported.

### DISCLOSURE

### TECHNICAL SOLUTION

In an aspect, a method may be provided. The method may include receiving a message including information related to a user plane connection and an address related to a first network entity; transmitting a message to a UE; receiving a UL NAS TRANSFER message including a reject reason from the UE; transmitting a notification message including the reject reason to the first network entity; transmitting an analysis request message to a second network entity related to analysis; and receiving an analysis response message from the second network entity.

In another aspect, an apparatus for implementing the method may be provided.

In an aspect, a method may be provided. The method may include receiving an analysis request message from a first network entity related to a location; receiving an analysis request message including the reject reason from the second network entity; and transmitting an analysis response message including information related to another network entity related to a location to the first network entity and/or the second network entity.

In another aspect, an apparatus for implementing the method may be provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIGS. 5 and 6 show an example of a PDU session establishment procedure to which implementations of the present disclosure are applied.
FIGS. 7a and 7b illustrate a first example of a location request procedure.
FIG. 8 illustrates a second example of a location request procedure.
FIG. 9 is a first example of a procedure related to a user plane connection.
FIG. 10 is a second example of a procedure related to a user plane connection.
FIG. 11 is an example of a procedure related to a modification of a user plane connection.
FIG. 12 illustrates an example in which user plane information is provided.
FIG. 13 is a first example of a procedure according to an embodiment of the present disclosure.
FIG. 14 is an example of an operation of a UE according to an embodiment of the present disclosure.
FIG. 15 is a second example of a procedure according to an embodiment of the present disclosure.
FIG. 16 is a third example of a procedure according to an embodiment of the present disclosure.
FIG. 17 is a fourth example of a procedure according to an embodiment of the present disclosure.
FIG. 18 is a fifth example of a procedure according to an embodiment of the present disclosure.
FIGS. 19a and 19b are a sixth example of a procedure according to an embodiment of the present disclosure.
FIG. 20 is a seventh example of a procedure according to an embodiment of the present disclosure.
FIG. 21 is an example of a user plane connection establishment command procedure according to an embodiment of the present disclosure.
FIG. 22 illustrates an example of a procedure performed according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

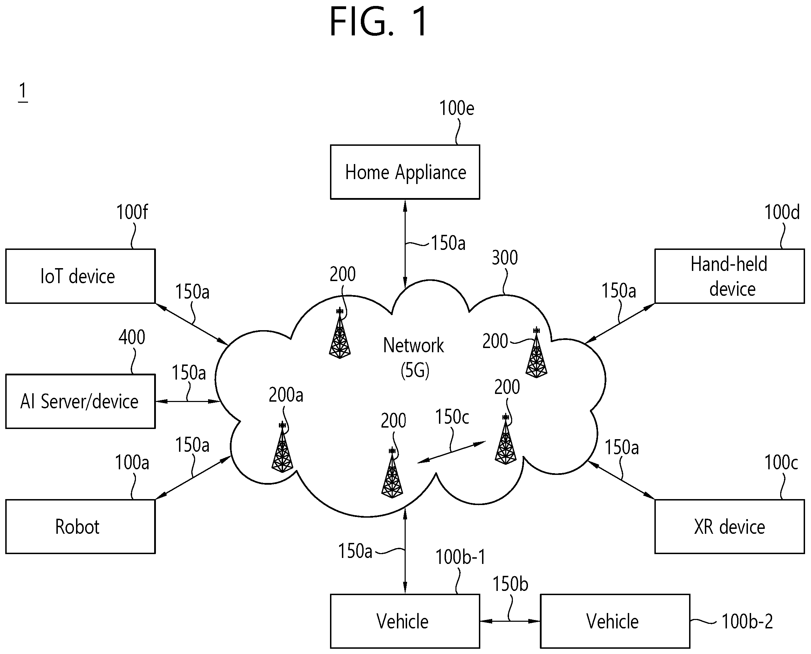

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

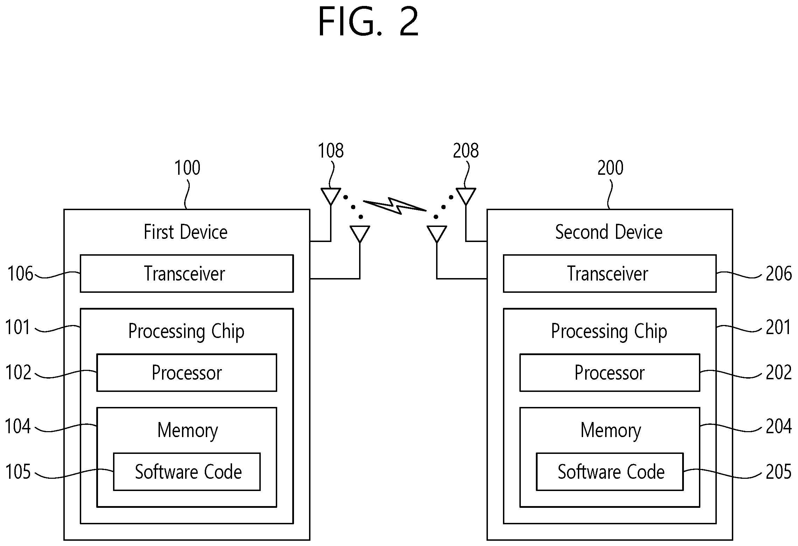

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally, and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

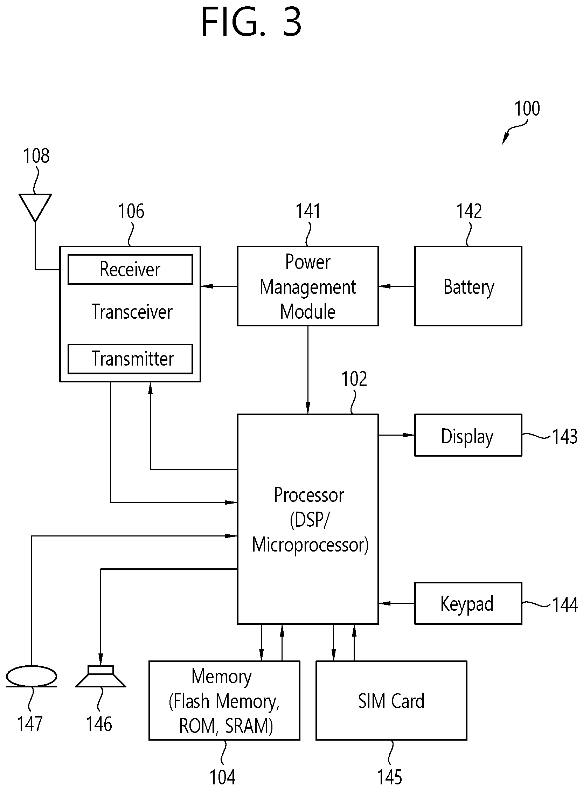

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

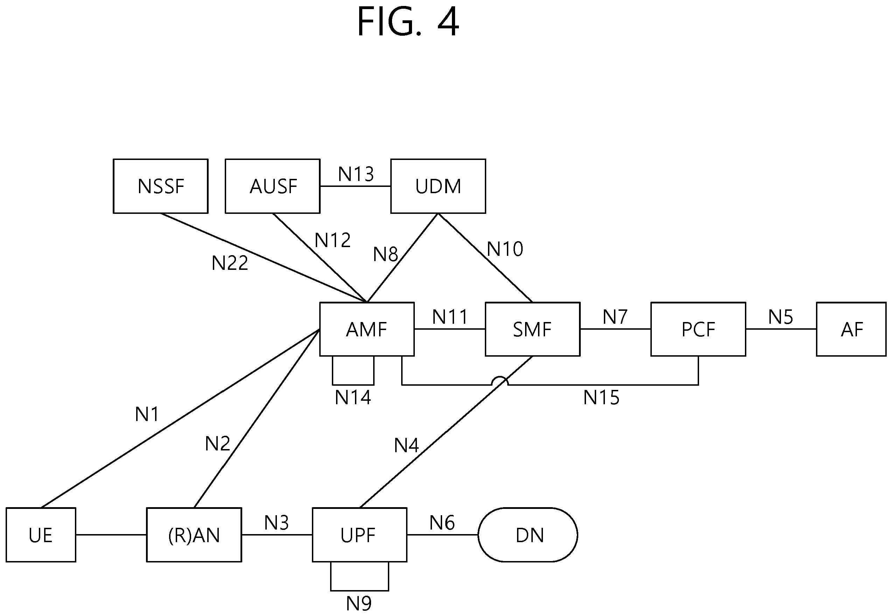

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A PDU session establishment procedure is described. Reference may be made to section 4.3.2 of 3GPP TS 23.502 V16.3.0 (2019-12).

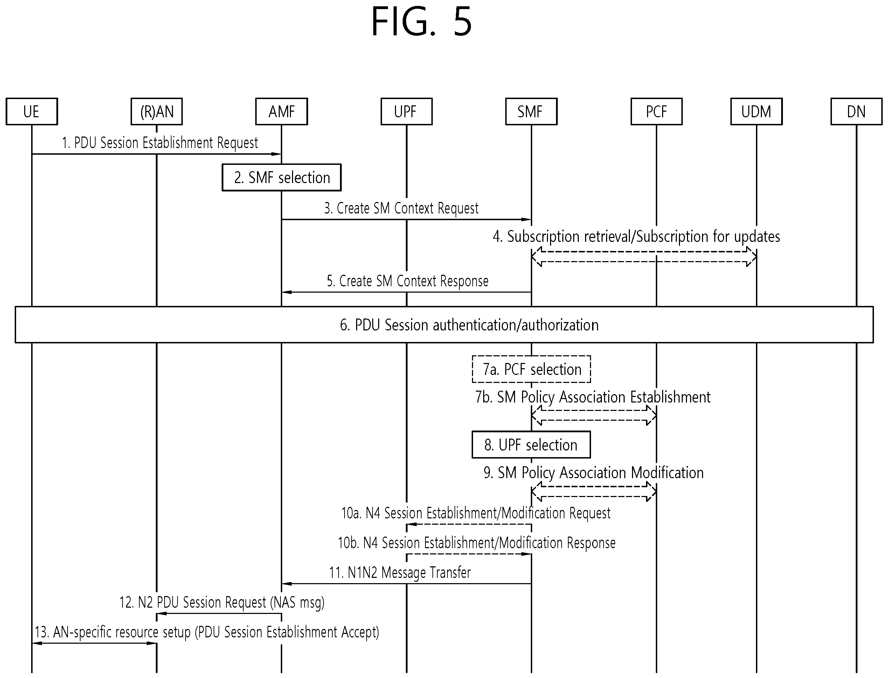

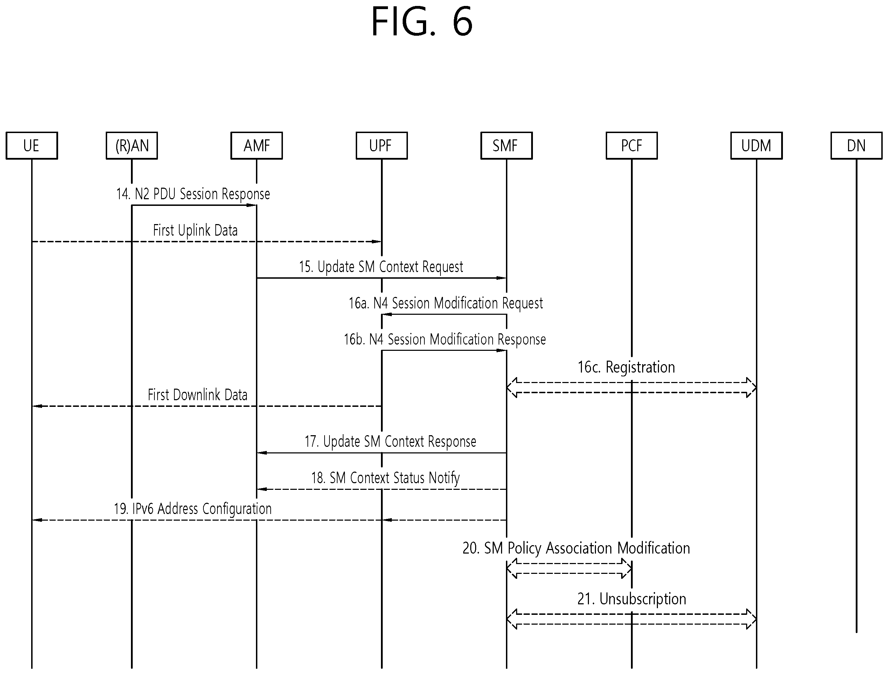

FIGS. 5 and 6 show an example of a PDU session establishment procedure to which implementations of the present disclosure are applied.

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, and if the serving PLMN S-NSSAI of the PDU session is present in the Allowed NSSAI of a target access type, the PDU session establishment procedure may be performed in the following cases.
- the SMF ID corresponding to the PDU session ID and the AMF belong to the same PLMN;
- the SMF ID corresponding to the PDU session ID belongs to the HPLMN;

Otherwise, the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept establishing a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below, and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

In various examples of the present disclosure, location related information may be used.

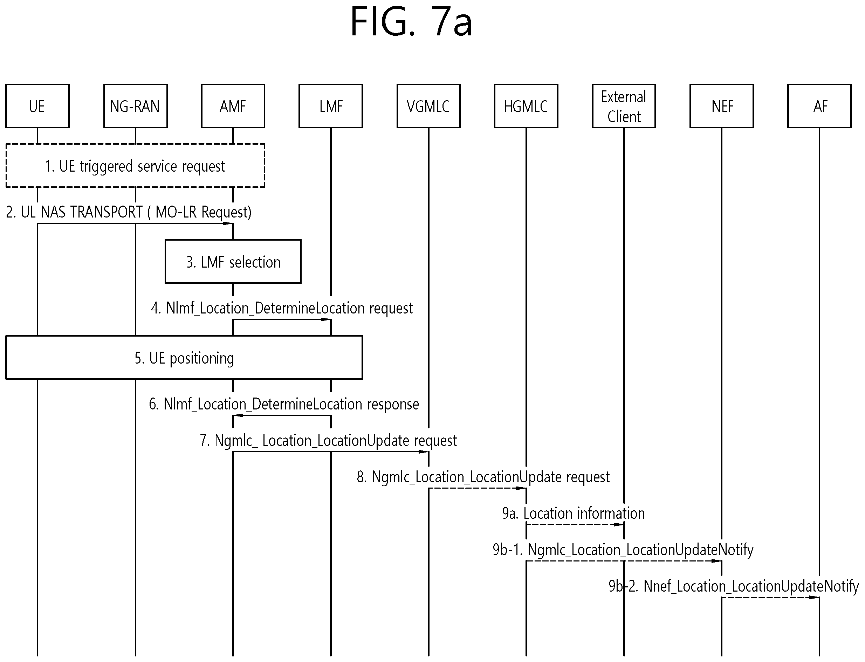

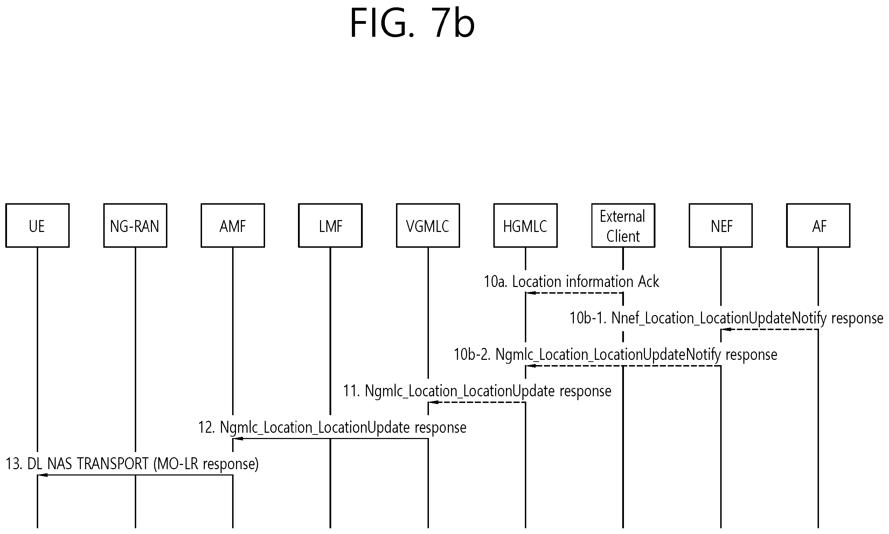

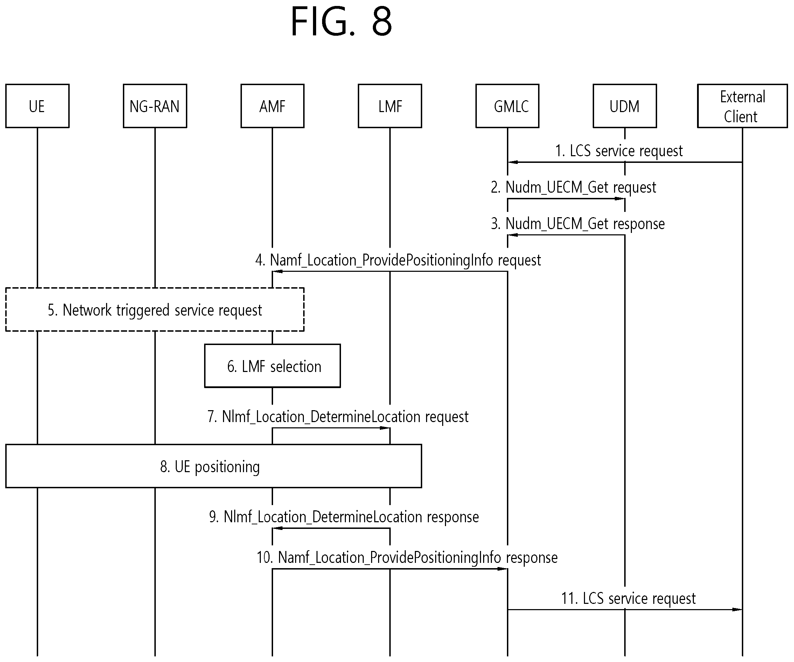

Hereinafter, an example of a procedure related to the location related information may be described with reference to examples of FIGS. 7a, 7b, and 8.

The following drawings are prepared to describe a specific example of the present specification. Since specific names of devices or specific names of signals/messages/fields described in the drawings are provided as examples, technical features of the present specification are not limited to the specific names used in the following drawings.

**FIGS. 7a** **and** **7b** **illustrate a first example of a location request procedure.**

In relation to the examples of FIGS. 7a and 7b, for detailed operations, reference may be made to TS 23.273 V18.4.0 S6.2.

The examples of FIGS. 7a and 7b are an example of a Mobile Originated (MO)-Location Request (LR) procedure in a 5GC.

According to the examples of FIGS. 7a and 7b, an example of a general network positioning in which a UE requests a serving PLMN to obtain only its location related information or assistance data may be described.
1) When the UE is in a CM-IDLE state, the UE may perform a Service Request triggered by the UE as defined in clause 4.2.3.2 of TS 23.502 V18.4.0 to establish a signaling connection with an AMF.
2) The UE may transmit an MO-LR request message included in a UL NAS TRANSPORT message. The MO-LR request may optionally include up to three LPP positioning messages.
3) The AMF may select an LMF. The AMF may locally configure a mapping table of a UE ID (e.g., an MSISDN and an LMF address). Upon receiving the MO-LR, the AMF may determine the LMF based on a local configuration or by retrieving from a UDM of UE LCS subscriber data.
4) The AMF may transmit a request message related to positioning to the LMF.

For example, the AMF may invoke an Nlmf_Location_DetermineLocation service operation towards the LMF. This service operation may include an LCS correlation identifier, a serving cell ID, a client type, an indication of whether a location estimate or location assistance data is requested, a UE positioning capability if available, a list of MO-LR subscribed assistance data, and all LPP messages included in the MO-LR request. When a location of the UE is requested, the service request may include whether the UE supports an LPP, a requested QoS, a supported GAD shape, and a scheduled location time.

5) UE positioning may be performed. For example, when the UE requests its location, operations described in clause 6.11 of TS 23.502 V18.4.0 may be performed together with operations described in step 12 of clause 6.1.2 of TS 23.502 V18.4.0 if a scheduled location time exists. When the UE requests location assistance data instead, the LMF may transmit this data to the UE as described in clause 6.11.1 of TS 23.502 V18.4.0. The LMF may determine exact location assistance data to be transmitted according to a data type specified by the UE, a UE location capability, assistance data subscribed to the MO-LR, and a current cell.

6) The LMF may transmit a response message related to positioning to the AMF.

For example, when a location estimate that best satisfies a requested QoS is obtained or requested location assistance data is transmitted to the UE, the LMF may transmit an Nlmf_Location_DetermineLocation response to the AMF. This service operation may include the LCS correlation identifier, the location estimate (if obtained), an age and an accuracy of the estimate, and may include information on a positioning method.

7) The AMF may transmit a request message related to positioning to a VGMLC.

For example, if the location estimate is successfully obtained, the AMF may invoke an Ngmlc_Location_LocationUpdate service operation towards a Visited Gateway Mobile Location Centre (VGMLC) allocated in step 2. This service operation may deliver an identifier of the UE, a cause event of a location estimation (5GC-MO-LR), the location estimate, an age, an obtained accuracy indication, and an LCS QoS class requested by a target UE. In addition, the service operation may include a pseudonym indicator, an identifier of an LCS client, an AF ID, a GMLC address, a location estimate timestamp, and a service type specified by the UE if available.

8) The VGMLC may transmit a location update request message to an HGMLC.

For example, when the UE does not request a location transmission to the LCS client or the AF in step 2, steps 8 to 11 may be omitted. When the VGMLC is the same NF instance as the HGMLC, step 8 may be omitted. Otherwise, the VGMLC may invoke an Ngmlc_Location_LocationUpdate service operation towards the HGMLC including information received from the AMF (the VGMLC may obtain an address of the HGMLC by querying an NRF).

9a) The HGMLC may transmit location information to an external client.

For example, when the pseudonym indicator is included in MO-LR location information, the HGMLC may allocate a pseudonym to the UE. When the identified LCS client is not accessible by the HGMLC, step 9a and step 10a may be omitted. Otherwise, a GMLC may transmit location information including an event triggering a location estimation (5GC-MO-LR), a service ID (if available), a location estimate, a location estimate timestamp (if available), and an age to the LCS client according to the LCS QoS class requested by the target UE.

9b-1) The HGMLC may transmit a location update notification message to a NEF.

For example, when the AF ID is included in step 1, the HGMLC may allocate a NEF address according to a local configuration or through the NRF, and may invoke an Ngmlc_Location_LocationUpdateNotify service request towards the NEF while delivering the AF ID. Location information parameters transmitted in this service operation may be the same as step 9a except that the pseudonym is not included.

9b-2) The NEF may transmit a location update notification message to an AF.

For example, when the identified AF is not accessible by the NEF, step 9b-2 and step 10b-1 may be omitted. Otherwise, the NEF may transmit the location information to the identified AF by invoking an Nnef_Location_LocationUpdateNotify service.

10a) The external client may transmit a location information Ack to the HGMLC.

For example, when the LCS client does not support the MO-LR for a temporary or permanent reason, or when the LCS client may not process a location estimate of the UE (e.g., when the LCS client does not know the service ID, when the UE is not registered with the LCS client, or when the LCS client does not have data of a corresponding UE), the LCS client may transmit a Location Information ack message with an appropriate error cause to the HGMLC. Otherwise, the LCS client may process the location estimate according to the service ID, and may transmit a location information ack message indicating that the location estimate of the UE is successfully processed to the GMLC or the HGMLC.

10b-1) The AF may transmit a location update notification response message to the NEF.

For example, when the AF may not process a location estimate of the UE, such as when the UE is not registered with the AF or the AF does not have corresponding data of the UE, the AF may respond to the Nnef_Location_LocationUpdateNotify service request with an appropriate error cause. Otherwise, the AF may process the location estimate according to the service ID and may respond to the Nnef_Location_LocationUpdateNotify service request indicating that the location estimate of the UE is successfully processed.

10b-2) The NEF may transmit an Ngmlc_Location_LocationUpdateNotify service response with an operation result to the HGMLC.

11) The HGMLC may transmit a location update response message to the VGMLC.

For example, when the VGMLC is the same NF instance as the HGMLC, this step may be omitted. When the identified LCS client or AF is not accessible, the HGMLC may transmit an Ngmlc_Location_LocationUpdate service response with an appropriate error cause to the VGMLC. Otherwise, the response may include an acknowledgment. This message may specify whether the identified LCS client or AF has successfully processed a location estimate of the UE and, if not, a corresponding error cause obtained in step 10.

12) The VGMLC may transmit a location update response message to the AMF.

For example, when the VGMLC receives an MO-LR location information acknowledgment from the HGMLC, and when the identified LCS client or AF is not accessible, the VGMLC may transmit an Ngmlc_Location_LocationUpdate service response with an appropriate error cause to the AMF. Otherwise, the response may include an acknowledgment. This message may need to specify whether the identified LCS client or AF has successfully processed a location estimate of the UE and, if not, a corresponding error cause obtained in step 9 or step 10. In addition, the VGMLC may record charging information for inter-working revenue charging with the UE.

13) The AMF may transmit a DL NAS TRANSPORT message including an MO-LR response to the UE.

For example, the UE may have requested its location. In this case, the MO-LR response may include all location estimates requested by the UE and a timestamp of the location estimate (if available) together with an indication received from the LMF including an indication indicating whether the obtained location estimate satisfies a requested accuracy or whether the location estimate is successfully transmitted to the identified LCS client or AF. When the location estimate is successfully transmitted to the identified LCS client or AF, the MO-LR response message may specify whether the identified LCS client or AF has successfully processed the location estimate of the UE and, if not, a corresponding error cause obtained in step 13. In addition, the AMF may record charging information.

The example of FIG. 8 is an example of a Mobile Terminated (MT)-Location Request (LR) procedure in a 5GC.

The following drawings are prepared to describe a specific example of the present specification. Since specific names of devices or specific names of signals/messages/fields described in the drawings are provided as examples, technical features of the present specification are not limited to the specific names used in the following drawings.

**FIG. 8** **illustrates a second example of a location request procedure.**

The example of FIG. 8 may be an example of a 5GC-MT-LR procedure for a regulatory location service.

In relation to the example of FIG. 8, for a detailed operation, reference may be made to TS 23.273 V18.4.0 S6.1.1.

FIG. 8 may illustrate an example of a general network positioning for an LCS client outside a PLMN for the regulatory location service in a non-roaming scenario. In this scenario, it may be assumed that a target UE is identified using a SUPI or a GPSI.

This procedure may be applied to a request of the LCS client for a current location of the target UE, and it may be assumed that the LCS client is authorized to use a location service and a privacy verification is not required.
1. An external client may transmit an LCS service request to a GMLC.
   For example, the external location service client may transmit a request for a location of the target UE identified by the GPSI or the SUPI to the GMLC. This request may include a required QoS, an unaware indication of a UE, and a supported GAD shape. When locations for one or more UEs are required, the following steps may be repeated, and in this case, the GMLC may check whether the number of target UEs included in the LCS request is equal to or less than a maximum target UE number of the LCS client. When exceeding the Maximum Target UE Number, the GMLC may reject the LCS request, omit steps 2 to 10, and respond to the client with an appropriate error cause in step 11.
2. The GMLC may invoke an Nudm_UECM_Get service operation towards a home UDM of the target UE to be located by the GPSI or the SUPI of this UE.
3. The UDM may transmit a network address of a currently serving AMF.
4. The GMLC may invoke a Namf_Location_ProvidePositioningInfo service operation towards the AMF to request a current location of the UE. This service operation may include the SUPI and a client type, and may include the required QoS, the unaware indication of the UE, and the supported GAD shape.
5. When the UE is in a CM IDLE state and the unaware indication of the UE is not included, the AMF may initiate a network triggered service request procedure as defined in clause 4.2.3.3 of TS 23.502 V18.4.0 to establish a signaling connection with the UE.
6. The AMF may select an LMF based on available information as defined in TS 23.273 V18.4.0 S5.1 or based on an AMF local configuration. The LMF selection may consider a 5G-AN currently serving the UE. The selection may use an NRF query.
7. The AMF may invoke an Nlmf_Location_DetermineLocation service operation towards the LMF to request the current location of the UE.
8. The LMF may perform one or more of positioning procedures described in TS 23.273 V18.4.0 S6.11.1, S6.11.2, and S6.11.3. During this step, the LMF may use a Namf_Communication_N1N2MessageTransfer service operation to request to transmit a positioning related N1 message to the UE or to transmit a network positioning message to a serving NG-RAN node (a gNB or an NG-eNB) for the UE. The LMF may determine a geographic location and optionally a location in local coordinates.
9. The LMF may transmit a positioning response message to the AMF.
   For example, the LMF may return an Nlmf_Location_DetermineLocation response to the AMF to return the current location of the UE and a UE positioning capability. This service operation may include an LCS correlation identifier, a location estimate, an age and an accuracy of the estimate, and may include information on a positioning method and a timestamp of the location estimate.
10. The AMF may return a Namf_Location_ProvidePositioningInfo response to a GMLC/LRF to return the current location of the UE. This service operation may include the location estimate, the age, and the accuracy, and may include the information on the positioning method and the timestamp of the location estimate. The AMF may store the UE positioning capability received from the LMF in a UE context.
11. The GMLC may transmit a location service response to the external location service client.

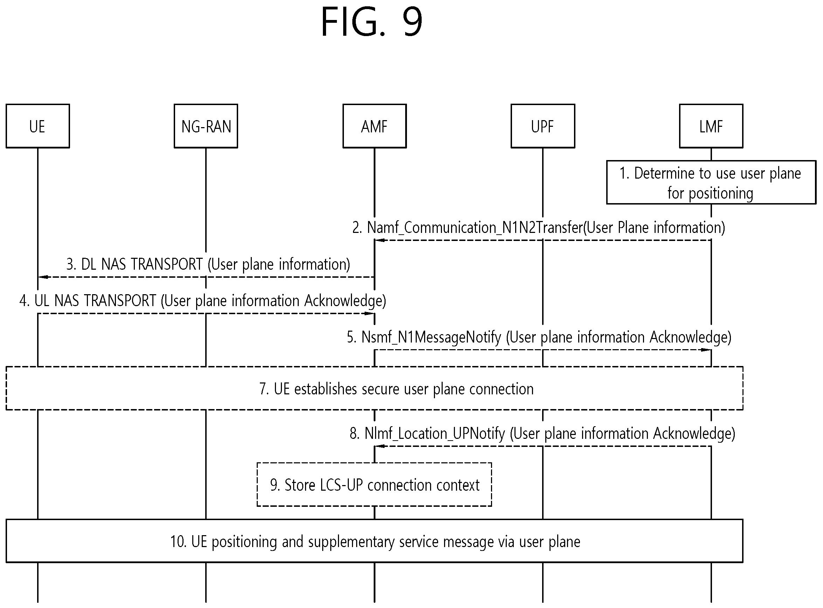

With reference to an example of FIG. 9, an example of a procedure related to a user plane connection between the UE and the LMF may be described. For the procedure related to the user plane connection, reference may be made to TS 23.273 V18.4.0 S6.18.

The example of the user plane connection procedure between the UE and the LMF may be described.

A management of the user plane connection between the UE and the LMF may be described. The LMF or the UE may trigger an establishment of the user plane connection. The UE and the LMF may maintain the established user plane connection. The LMF may modify or terminate the user plane connection established between the UE and the LMF.

The LMF may transmit user plane information (e.g., an IP address or an FQDN) to the UE through a DL NAS TRANSPORT message of the AMF. When the LMF transmits the FQDN to the UE, a DNS server/resolver may resolve the IP address of the LMF (e.g., an EASDF or a local DNS for resolving a local LMF address). The UE may establish a PDU session used for user plane positioning using a URSP including PDU session parameters related to the user plane positioning (e.g., a dedicated DNN and an S-NSSAI). An SMF may select a PSA UPF (located in a central site or a local site) connected to the LMF for this PDU session based on the S-NSSAI, the DNN, and UE location information.

A session breakout for a local LMF service for the user plane positioning may be supported by configuring the SMF in advance with an IP address/network prefix of a local LMF and a corresponding DNAI to position a dedicated PDU session in a specific service area for inserting a local PSA and a UL CL/BP.

In the example of FIG. 9, the LMF may initiate the user plane connection.

When the target UE does not have the user plane connection with the LMF, the LMF may trigger the user plane connection establishment after receiving a location request from the AMF. When the UE supports the user plane positioning, the AMF may subscribe to an LCS user plane connection status for the target UE from the LMF using an Nlmf_Location_UP Subscribe message. FIG. 9 may show a procedure triggered by the LMF to support positioning through the user plane connection between the UE and the LMF.

The following drawings are prepared to describe a specific example of the present specification. Since specific names of devices or specific names of signals/messages/fields described in the drawings are provided as examples, technical features of the present specification are not limited to the specific names used in the following drawings.

**FIG. 9** **is a first example of a procedure related to a user plane connection.**

According to an example of FIG. 9, an NW triggered user plane connection may be performed. An LMF may perform a user plane connection configuration for a terminal, and thereafter, the LMF and the terminal may transmit and receive Location related messages through the connected user plane.
1. The LMF may determine to use a user plane for positioning.

For example, based on a UE user plane positioning capability, a control plane congestion status (e.g., an AMF load status), and other implementation elements, the LMF may determine whether to use a positioning procedure via a user plane connection between the UE and the LMF.

The LMF may invoke an Nnrf_NFDiscovery service operation to retrieve the control plane congestion status (e.g., AMF load information). Based on the AMF load information, the LMF may determine to use user plane positioning when an available user plane connection exists between the UE and the LMF.

When a user plane connection context of a target UE already exists in the LMF and the LMF determines to utilize a user plane connection for positioning, steps 2 to 7 may be omitted.

2. [Conditional] The LMF may transmit a message including user plane information to an AMF.

For example, when the LMF determines to utilize the user plane for positioning and a secure user plane connection is not configured between the UE and the LMF, the LMF may invoke a Namf_communication_N1N2MessageTransfer service operation. For example, the LMF may transmit the user plane information to the AMF in a NAS container to inform the UE to utilize the user plane via TLS for positioning. The user plane information may include a user plane positioning address of the LMF and security related information.

3. [Conditional] When the AMF receives the user plane information from the LMF in step 2, the AMF may transmit this to the UE through a DL NAS TRANSPORT message.

4. [Conditional] The UE may transmit a UL NAS TRANSPORT message to the AMF.

For example, when a corresponding PDU session configured for user plane positioning does not exist, the UE may establish a PDU session for the user plane positioning using a URSP including user plane positioning related PDU session parameters (e.g., a dedicated DNN and an S-NSSAI). The UE may transmit a confirmation to the LMF through the AMF to indicate a success in utilizing a user plane connection for a positioning service or a failure in utilizing the user plane connection (e.g., an appropriate PDU session is not established).

5. [Conditional] The AMF may transmit the confirmation received in step 4 to the LMF through a Namf_N1MessageNotify service.

7. [Conditional] The UE may establish a secure user plane connection with the LMF. When the LMF transmits an FQDN to the UE, a DNS server/resolver may be used to resolve an IP address of the LMF (e.g., an EASDF or a local DNS for resolving a local LMF address).

8. [Conditional] The LMF may indicate that the user plane connection between the UE and the LMF is configured by transmitting an Nlmf_Location_UPNotify message to the AMF.

9. [Conditional] The AMF may store the LCS-UP connection context as part of a UE context.

9. [Conditional] The AMF may store an LCS-UP connection context as a part of a UE context.

10. When the LMF or the UE determines to utilize the user plane connection for positioning and a secure user plane connection is configured, an LPP message may be transmitted between the UE and the LMF for UE based positioning, UE assisted positioning, and assistance data delivery. An auxiliary service message such as an event reporting message, a periodically triggered invocation message, and an MS cancel deferred location message may also be transmitted between the LMF and the UE through the configured user plane connection.

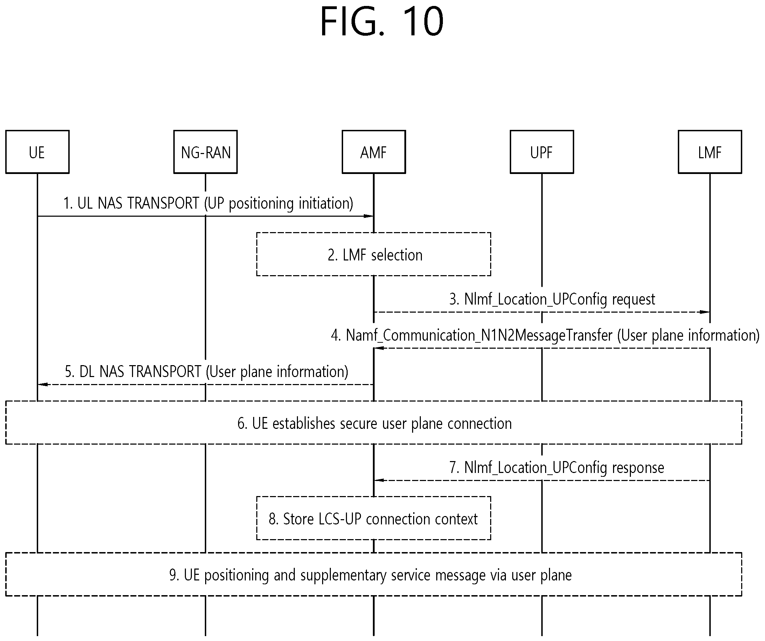

With reference to an example of FIG. 10, an example of a user plane connection initiated by the UE may be described.

When the UE does not have a user plane connection with the LMF, the UE may trigger a user plane connection establishment. FIG. 10 may illustrate a procedure triggered by the UE to support positioning through the user plane connection between the UE and the LMF.

According to the example of FIG. 10, when the terminal intends to transmit a location related message, the AMF may select an LMF corresponding to the terminal. The AMF may inform the corresponding LMF that a transmission of the positioning related message is required, and thereafter, the LMF may connect a user plane connection for location related message handling.

The following drawings are prepared to describe a specific example of the present specification. Since specific names of devices or specific names of signals/messages/fields described in the drawings are provided as examples, technical features of the present specification are not limited to the specific names used in the following drawings.

**FIG. 10** **is a second example of a procedure related to a user plane connection.**

According to the example of FIG. 10, positioning via a user plane connection between a UE and an LMF may be initiated by the UE.
1. The UE may transmit a UL NAS TRANSPORT message to an AMF.
   For example, when the UE determines to request a user plane connection for a future positioning request, the UE may transmit a NAS message including a user plane configuration request to the AMF.
2. [Conditional] The AMF may select an LMF.
   For example, when an authorization for the UE to use user plane positioning is granted according to a UE subscription, the AMF may select an LMF that may configure a user plane session for positioning with the UE. The AMF may retrieve and select an appropriate LMF by querying an NRF or based on a local configuration.
3. [Conditional] The AMF may transmit an Nlmf_Location_UPConfig request to the LMF to request an LCS-UP connection configuration.
4. [Conditional] The AMF may transmit a message including user plane information to the AMF.
   For example, when the LMF accepts a user plane utilization for positioning and a secure user plane connection is not configured between the UE and the LMF, the LMF may transmit the user plane information to the AMF, thereby instructing the UE to accept and utilize the user plane for positioning. The user plane information may include a user plane positioning address of the LMF and security related information.
5. [Conditional] When the AMF receives the user plane information from the LMF in step 4, the AMF may transmit a DL NAS TRANSPORT message including the user plane information to the UE.
6. [Conditional] When the secure user plane connection is not configured, the UE may establish a secure user plane connection with the LMF. The UE may determine PDU session parameters including a DNN+S-NSSAI using the user plane positioning address of the LMF and information of a URSP. The UE may establish a PDU session using the PDU session parameters. When an SMF receives a request, the SMF may select an appropriate UPF based on the DNN+S-NSSAI, and may establish a connection between the UPF and the LMF.
7. [Conditional] The LMF may respond to the AMF that the user plane connection between the UE and the LMF is established.
8. [Conditional] The AMF may store an LCS-UP connection context as a part of a UE context.
9. [Conditional] After the secure user plane connection is configured, the LMF may determine to utilize the user plane connection for positioning after receiving a positioning request from the AMF, or the UE may determine to utilize the user plane connection for positioning. In this case, an LPP message may be transmitted between the UE and the LMF for UE based positioning, UE assisted positioning, and assistance data delivery. An auxiliary service message such as an event reporting message, a periodically triggered invocation message, and an MS cancel deferred location message may also be transmitted between the LMF and the UE through the configured user plane connection.

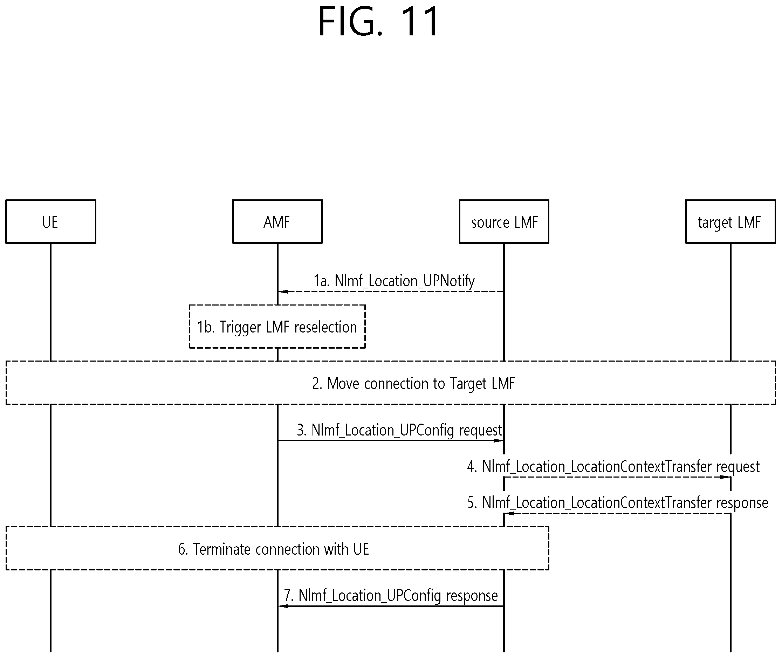

With reference to an example of FIG. 11, a modification of a user plane connection between the UE and the LMF may be described.

FIG. 11 may illustrate an example of how a secure user plane connection between the UE and the LMF is modified. This procedure may describe an LMF change, but may also be applied when a source LMF and a target LMF are the same. This procedure may also be used to terminate a user plane connection to the source LMF without selecting the target LMF.

The following drawings are prepared to describe a specific example of the present specification. Since specific names of devices or specific names of signals/messages/fields described in the drawings are provided as examples, technical features of the present specification are not limited to the specific names used in the following drawings.

**FIG. 11** **is an example of a procedure related to a modification of a user plane connection.**

The example of FIG. 11 may be an example of a procedure related to a modification of a connection between a UE and one or more LMFs.

1a. [Conditional] A source LMF may transmit a notification message to an AMF.

For example, the LMF may discover a need to change the LMF, reconfigure a user plane connection between the UE and the LMF, or terminate the user plane connection. The LMF may transmit an Nlmf_Location_UPNotify message. The Nlmf_Location_UPNotify message may include information indicating that a connection movement (termination and establishment) or a termination is required. When the connection movement is requested, the Nlmf_Location_UPNotify message may include a target LMF identifier. An address of the AMF may be provided to the LMF as a "notification target address" in a latest Nlmf_Location_UPConfig message or an Nlmf_Location_UP subscription message.

1b. [Conditional] The AMF may trigger an LMF reselection.

For example, based on the target LMF identification received from the source LMF for user plane positioning, or when the UE moves to a new location (the UE may leave a service area of the source LMF and be in a service area of the target LMF), the AMF may select the target LMF for a current UE location based on an LMF service area, LMF user plane positioning capability information, and other information. The LMF may establish a user plane session for positioning with the UE. In addition, upon an AMF relocation, a target AMF may inform the LMF of an AMF change.

2. [Conditional] The connection may be moved to the target LMF.

For example, when an AMF reallocation occurs, this step may be skipped. Otherwise, steps 3 to 8 of FIG. 10 may be performed among the AMF, the UE, and the Target LMF, and a connection of the UE to the Source LMF may also be terminated.

3. The AMF may transmit a configuration request message to the source LMF.

For example, the AMF may transmit an Nlmf_Location_UPConfig request towards the source LMF. This message may include a request for the source LMF to terminate a specific user plane connection for the UE and the target LMF identifier. Alternatively, this message may include information on the AMF reallocation.

4~5. [Conditional] The source LMF may transmit a request message, and the target LMF may transmit a response message.

For example, when there is a periodically triggered UE location event reporting context, the source LMF may invoke an Nlmf_Location_LocationContextTransfer request service operation towards the target LMF to provide a current location context of the UE. The target LMF may inform the source LMF of a location context transfer operation result.

6. [Conditional] The connection with the UE may be terminated.

For example, when the user plane connection to the source LMF is still active, the source LMF may terminate the connection to the UE.

7. The LMF may transmit an Nlmf_Location_UPConfig response message to the AMF to confirm a connection termination or to acknowledge the change of the AMF. When this procedure is used for termination, the AMF may release an LCS-UP context after receiving the response message.

According to the conventional art, a location management protocol may be transmitted in a control plane. A location management protocol using a User plane is being discussed. However, when the user plane is used, there may be a problem that how a terminal and a network will operate is not defined.

For example, as described above, when the terminal supports a User plane location, the AMF may subscribe to receive an LCS user plane status of the UE from the LMF. In addition, for a User plane connection, the LMF may request a UP connection.

However, according to the conventional art, when the LMF requests such a connection, an operation of the terminal and an operation of the network (the AMF and the LMF) may not be clear. In addition, when an establishment of the user plane connection fails, there may be a problem that how the terminal and a network entity (e.g., the AMF and the LMF) will operate is not clear.

In various examples of the present disclosure, an operation of the terminal and an operation of the network for an establishment of a user plane connection may be defined.

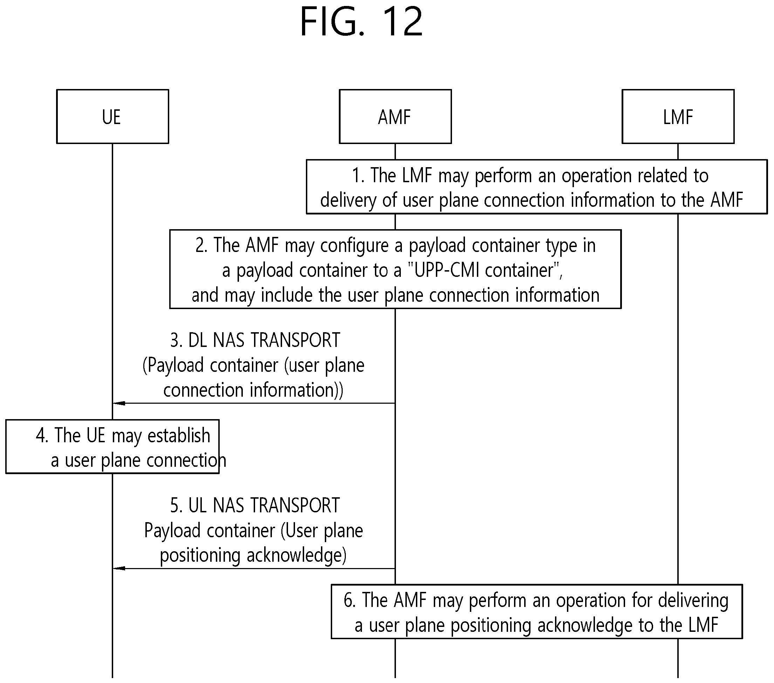

With reference to FIG. 12, provision of user plane connection information according to the conventional art (e.g., TS 24.572 V18.4.0) may be described.

The following drawings are prepared to describe a specific example of the present specification. Since specific names of devices or specific names of signals/messages/fields described in the drawings are provided as examples, technical features of the present specification are not limited to the specific names used in the following drawings.

**FIG. 12** **illustrates an example in which user plane information is provided.**

Through user plane connection information provisioning operations, a network may provide user plane connection information to a UE as described in clause 6.18.1 of 3GPP TS 23.273 V18.4.0. The user plane connection information may be encapsulated in a UPP-CMI container of a DL NAS TRANSPORT message, and a user plane positioning acknowledge may be encapsulated in a UPP-CMI container of a UL NAS TRANSPORT message as defined in 3GPP TS 24.501 [4]. FIG. 12 may illustrate an example of a NAS signaling transmission for user plane connection information provisioning.

Referring to FIG. 12, the following operations may be performed.
1. An LMF may perform an operation related to a delivery of the user plane connection information to an AMF.
   For example, the LMF may determine to use user plane positioning, and a secure user plane connection for an LCS-UPP may not be established. In this case, the LMF may invoke a Namf_Communication_N1N2MessageTransfer service operation towards the AMF to request to deliver the user plane connection information.
2. The AMF may configure a payload container type in a payload container to a "UPP-CMI container", and may include the user plane connection information in the payload container. The payload container may be included in the DL NAS TRANSPORT message to be transmitted by the AMF to the UE.
3. The AMF may transmit the DL NAS TRANSPORT message to the UE. The DL NAS TRANSPORT message may include the payload container. The payload container may include the user plane connection information.
4. The UE may establish a user plane connection.
   For example, when the user plane connection for the LCS-UPP is not established, the UE may establish the user plane connection for the LCS-UPP. To indicate a success or a failure of the user plane connection for the LCS-UPP, the UE may configure the payload container type to the "UPP-CMI container", and may include the payload container in the UL NAS TRANSPORT message.
5. The UE may transmit the UL NAS TRANSPORT message to the AMF. The UL NAS TRANSPORT message may include the payload container. The payload container may include the user plane positioning acknowledge.
6. The AMF may perform an operation for delivering the user plane positioning acknowledge to the LMF. For example, the AMF may invoke a Namf_Communication_N1MessageNotify service operation towards the LMF to deliver the user plane positioning acknowledge.

According to a conventional art (e.g., TS 24.572 V18.4.0) illustrated in FIG. 12, when a terminal does not have a PDU session to be used for the user plane positioning, the LMF may perform the following operations. For example, to establish a connection for the user plane positioning, the LMF may inform the AMF of the user plane connection information. The AMF may transmit the DL NAS TRANSPORT message to the terminal. For example, the DL NAS TRANSPORT message may include the payload container type and the payload container. For example, the AMF may configure the payload container type to a "UPP CMI-container" type, and may include the user plane connection information received from the LMF as the payload container.

However, since a subsequent operation of the terminal is not defined in the conventional art, the present disclosure may define the operation of the terminal in such a state. In addition, an operation when an AMF or LMF network entity receives a user plane positioning ACK from the terminal may also be defined.

Hereinafter, an example of an operation of the terminal and an operation of the network related to a user plane positioning connection may be described.

The following drawings are prepared to describe a specific example of the present specification. Since specific names of devices or specific names of signals/messages/fields described in the drawings are provided as examples, technical features of the present specification are not limited to the specific names used in the following drawings.

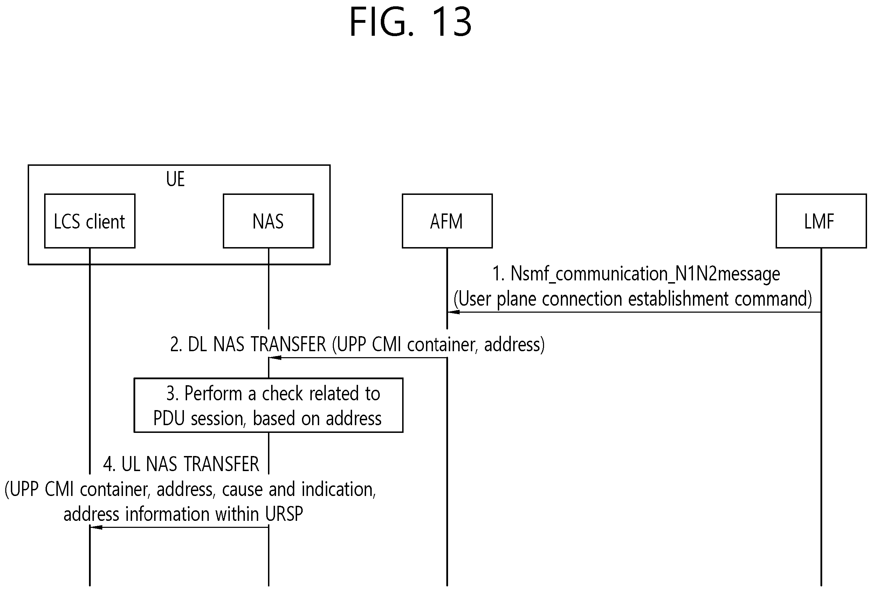

**FIG. 13** **is a first example of a procedure according to an embodiment of the present disclosure.**

For reference, in various examples including FIG. 13, a UE may include an LCS client and a NAS. The LCS client and the NAS may be logically implemented in a processor of the UE. The UE may perform both operations related to the LCS client and operations related to the NAS.
1. An LMF may transmit a message (including a user plane connection establishment command) based on a Namf_Communication_N1N2message service operation to an AMF.
2. The AMF may transmit a DL NAS TRANSFER message to the UE. The DL NAS TRANSFER message may include a UPP CMI container and an address. Here, the address may mean an address of the LMF.
3. The UE may perform a check related to a PDU session based on the address.

For example, the terminal may receive a DL NAS TRANSFER message from the AMF, and may sequentially perform the following operations based on the address (e.g., an LMF LCS-UP address) included in the DL NAS TRANSFER message:
- 1)The UE may check whether a PDU session related to the received address is currently established. For example, if the PDU session corresponding to the received address is established, the UE may check whether data is transmittable based on the corresponding PDU session. When the terminal transmits a 5GSM message based on the PDU session, such a message may be piggybacked in a 5GMM message and delivered as the 5GMM message. Upon delivering such a 5GMM message, the terminal may have a service area to which the corresponding 5GMM message is intended to be delivered in an allowed area or in a non-allowed area. Alternatively, a registration area may be an allowed area or a not allowed area. That is, when transmission for the PDU session using the corresponding user plane is actually transmitted through a radio network, the terminal may check that a service intended to be moved to the user plane may be restricted by a non-allowed area (e.g., a TA may not be allowed or may be partially not allowed, and in this case, the terminal may be related to a forbidden cell or a not allowed cell) where the service area or the registration area connected to the corresponding radio network is not allowed. When the service is restricted, the UE may deliver a cause and an indication (an indication with cause) in step 4.
- 2) When the PDU session related to the received address is not established, the UE may deliver a PDU session associated with the LMF LCS-UP address received from the AMF. For example, the UE may perform a PDU session establishment procedure to the address received from the AMF based on the address received from the AMF. As an example, the UE may transmit a PDU session establishment request message based on the received address to an SMF via the AMF.
- 3) The UE may deliver a PDU session list of which a connection capability type is "LCS user plane positioning" in a Route selection description of a URSP based on a priority order, and may also deliver an indication indicating that an establishment of a PDU session is triggered together. For example, the PDU session related to the received address may not exist, and the address (e.g., the LMF LCS-UP address) received from the AMF may not exist. In this case, the terminal may perform a PDU session establishment procedure for a PDU session of which a connection capability type is "LCS user planning positioning" in a Route Selection Description (RSD) in a URSP (UE Route Selection Policy) stored in the terminal. This means that the terminal uses a stored value without receiving the LMF address from the AMF. At this time, the terminal may have one or more "LCS user planning positioning" connection capability types in the RSD in the URSP of the terminal. In this case, an IP address and an FQDN may be stored in a traffic descriptor of a URSP rule in the URSP, and in this case, the terminal may use the address in the stored URSP. At this time, when the terminal has a plurality of URSP rules, the terminal may perform a PDU session establishment procedure for a PDU session having a high priority according to a URSP priority.

4. A NAS of the UE may deliver a DL NAS TRANSFER to the LCS client. The DL NAS TRANSFER may include the UPP CMI container, the address, the cause and the indication, and indication information requesting to use the address in the URSP. At this time, the address may inform an address value received from the AMF. In addition, the address in the URSP may inform to use an address utilized from a URSP value stored in the terminal.

The following drawings are prepared to describe a specific example of the present specification. Since specific names of devices or specific names of signals/messages/fields described in the drawings are provided as examples, technical features of the present specification are not limited to the specific names used in the following drawings.

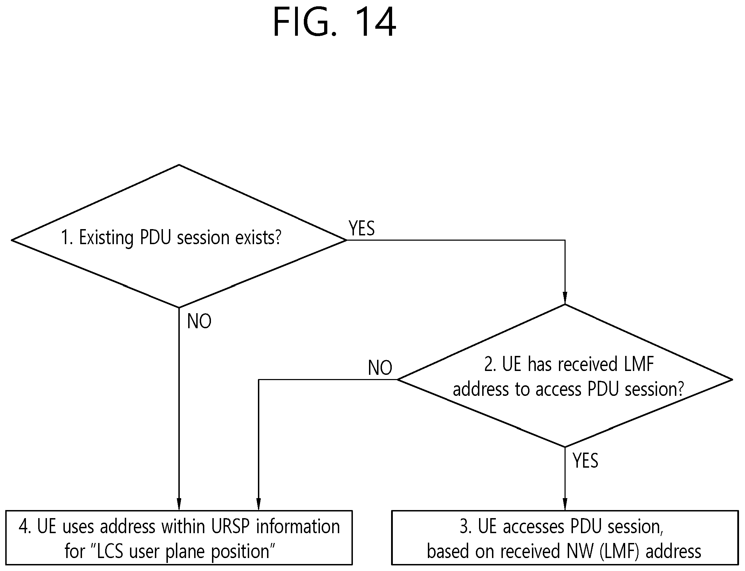

**FIG. 14** **is an example of an operation of a UE according to an embodiment of the present disclosure.**

The example of FIG. 14 may mean an operation of a UE according to step 3 in the example of FIG. 13.
1. The UE may determine whether a PDU session exists.
2. When the PDU session exists, the UE may determine whether an LMF address for accessing the PDU session is received.
3. When the UE receives the LMF address for accessing the PDU session, the UE may establish the PDU session based on a received network (e.g., an LMF) address, or may establish the PDU session.
4. When the PDU session does not previously exist, or when the PDU session exists but the UE does not receive the address of the LMF for accessing the PDU session, step 4 may be performed. For example, the UE may establish the PDU session based on an address in a URSP for "LCS user plane positioning".

A 5GS terminal may store a policy of the terminal, and such a URSP (UE route selection policy) of the UE may be pre-configured in the terminal. For example, when data is received from an upper layer, a URSP related to how corresponding data is to be delivered to a network may be configured in the terminal in advance. Such a URSP may have one or more URSP rules, and one URSP rule may include several traffic descriptors. The traffic descriptor may mean a configuration of corresponding data traffic. At this time, a connection capability type may exist in the traffic descriptor, and the connection capability type may indicate a connection type of a corresponding data packet. For example, when a DNN type exists, a DNN of a corresponding connection may exist, and when an IP type exists, an IP address of a corresponding connection may exist. At this time, when the connection capability type is set to "LCS user plane positioning", the corresponding connection may be considered as a connection due to the LCS user plane positioning. At this time, the terminal may receive an IP address (an LMF address) that does not exist in the URSP from an AMF. In this case, the terminal may newly perform a PDU session establishment request based on an address newly received by the terminal rather than the address in the URSP. In this case, the LMF or the AMF may inform the terminal through an indication of which value is preferentially used, that is, whether the terminal uses an address value informed by the AMF or an address value existing in the URSP.

Alternatively, in case of a configuration of the terminal, which value is used as a priority may be configured. For example, a PCF may inform the URSP, and an NW may configure a corresponding URSP value. For example, the URSP may be updated through an NW configuration. Alternatively, instead of the NW directly providing the URSP over-the-air, the URSP may be configured by a configuration of the terminal itself. That is, the above configuration of the terminal may indicate that a configuration of the terminal due to a UE implementation rather than the URSP may be used.

An LMF LCS-UP address received by the terminal from the NW may not exist. In this case, when the terminal receives a DL NAS TRANSFER message including a payload container type of an LPP-CMI container type from the AMF, a terminal NAS may inform an upper layer (e.g., a module or an entity processing an LMF in the terminal) of the received address and IP address information or FQDN information on a PDU session of which a Connection Capability type is "LCS user planning positioning" in a Route Selection Descriptor in the URSP together.

The following drawings are prepared to describe a specific example of the present specification. Since specific names of devices or specific names of signals/messages/fields described in the drawings are provided as examples, technical features of the present specification are not limited to the specific names used in the following drawings.

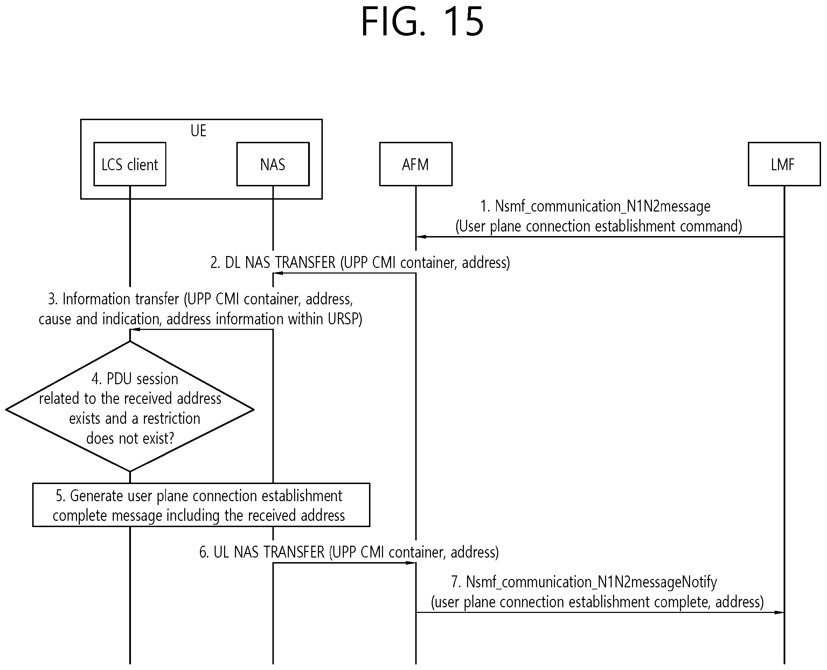

**FIG. 15** **is a second example of a procedure according to an embodiment of the present disclosure.**
1. An LMF may transmit a message (including a user plane connection establishment command) based on a Namf_Communication_N1N2message service operation to an AMF.
2. The AMF may transmit a DL NAS TRANSFER message to a UE. The DL NAS TRANSFER message may include a UPP CMI container and an address. Here, the address may mean an address of the LMF.
3. A NAS of the UE may deliver information to an LCS client of the UE. For example, the delivered information may include the UPP CMI container, the address, a cause and an indication, and address information in a URSP.
4. The UE may determine whether a PDU session related to the received address exists and whether a restriction does not exist in a service area or a registration area to transmit the corresponding PDU session using the cause and the indication.

For example, a terminal may receive a DL NAS TRANSFER message having a payload container type of a "UPP-CMI container" from the AMF. The terminal may determine whether a PDU session mapped to a received LMF LCS-UP address is already established.

If the PDU session is already established, the terminal may check whether a restriction related to a service area or a registration area to transmit the corresponding PDU session exists before transmitting data to a lower layer through the corresponding PDU session.

For example, the terminal may check whether a current TAI is included in allowed tracking areas. A NAS of the terminal may inform an LMF (e.g., the LCS client) of the terminal of service restriction area information of the corresponding current TAI.

In the above example, the service restriction area information may be as follows. The service restriction area information may include information on whether the current TAI is in an allowed tracking area or in a non-allowed tracking area. Alternatively, the service restriction area information may include information on whether the current TAI is in a partially allowed tracking area or in a partially rejected area. Alternatively, the service restriction area information may include information on whether a current cell is an allowed cell or a non-allowed cell.

5. The terminal may generate a user plane connection establishment complete message based on the received address.

For example, the received address may be related to the already established PDU session, and since a service restriction of the terminal does not exist, an immediate transmission may be possible. In this case, the terminal may generate a User plane connection establishment complete message. If a restriction occurs due to a restriction of a cell, a registration area, or a service area to transmit corresponding data with respect to data transmitted through the PDU session in step 5, the terminal may generate a user plane connection establishment failure message based on the restriction. An NW may receive the corresponding message, and may know a cause of a failure of a corresponding user plane connection establishment and the failure of the connection establishment. Alternatively, by not transmitting the user plane connection establishment complete message to the NW by the terminal, the NW may be able to know that the corresponding user plane connection establishment has failed.

6. The terminal may transmit a UL NAS TRANSFER message to the AMF. The UL NAS TRANSFER message may include the UPP CMI container and the address. The UPP CMI container may include the user plane connection establishment complete message.

Here, the address may be an address related to a user plane connection establishment complete of the terminal. For example, this address may be an address received by the terminal from the AMF. The terminal may inform through a 1-bit indicator whether the address of step 6 is the address received in step 2 or an address of a PDU session previously allocated for LCS user plane positioning existing in a URSP of the terminal.

The following drawings are prepared to describe a specific example of the present specification. Since specific names of devices or specific names of signals/messages/fields described in the drawings are provided as examples, technical features of the present specification are not limited to the specific names used in the following drawings.

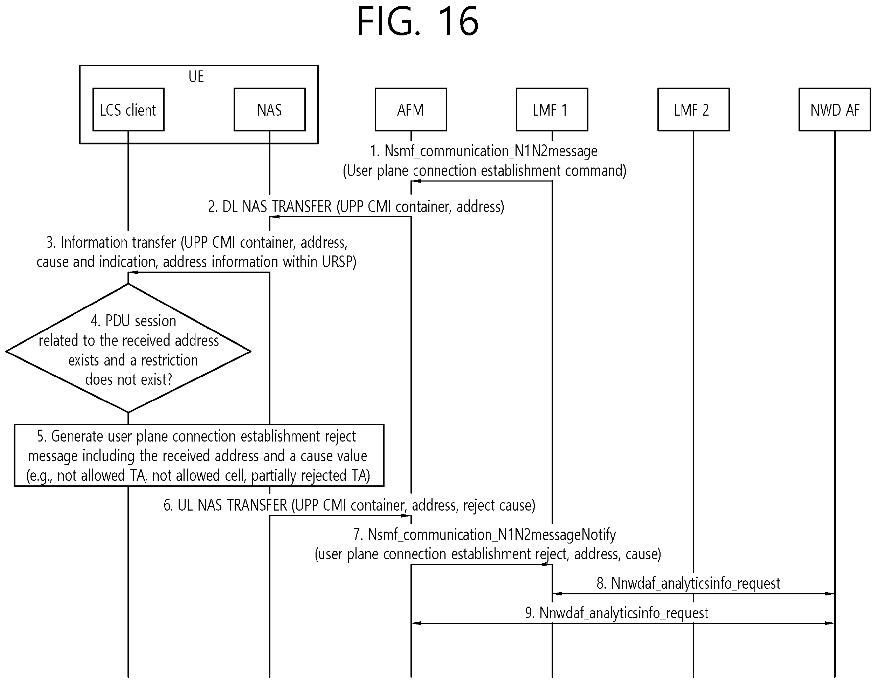

**FIG. 16** **is a third example of a procedure according to an embodiment of the present disclosure.**
1. An LMF may transmit a message (including a user plane connection establishment command) based on a Namf_Communication_N1N2message service operation to an AMF.
2. The AMF may transmit a DL NAS TRANSFER message to a UE. The DL NAS TRANSFER message may include a UPP CMI container and an address. Here, the address may mean an address of the LMF.
3. A NAS of the UE may deliver information to an LCS client of the UE. For example, the delivered information may include the UPP CMI container, the address, a cause and an indication, and address information in a URSP.
4. The UE may determine whether a PDU session related to the received address exists and whether a restriction for transmitting data transmitted through the corresponding PDU session exists.

For example, a terminal may receive a DL NAS TRANSFER message having a payload container type of a "UPP-CMI container" from the AMF. The terminal may check whether a PDU session mapped to a received LMF LCS-UP address is already established. Alternatively, the terminal may check whether a user plane resource of a PDU session associated with a received address is available.

For example, when the PDU session related to the received address is established, the terminal may check a restriction of a service area related to the corresponding PDU session.

For reference, when the terminal determines that there is no restriction in step 4, steps 5 to 7 of FIG. 15 may be performed.

5. The terminal may generate a user plane connection establishment reject message including the received address and a cause value (e.g., a not allowed TA, a not allowed cell, and a partially rejected TA).

For example, when the PDU session related to the received address is established and a service restriction of the terminal exists, the terminal may generate a User plane connection establishment reject message. For example, the terminal may determine that transmission of positioning information will fail even if the terminal performs a User plane positioning connection establishment, and the terminal may generate the User plane connection establishment reject message.

6. The terminal may transmit a UL NAS TRANSFER message to the AMF.

For example, the UL NAS TRANSFER message may include the UPP CMI container, the address, and a reject cause. For example, the reject cause here may be a cause why a user plane connection establishment of the terminal is rejected.

For example, the cause may be a not allowed TA, a partially rejected TA, and a not allowed cell.

The AMF may perform a procedure of selecting a new LMF for the terminal. For example, when the UL NAS Transfer message received by the AMF includes a payload container type of a UPP-CMI container and a reject cause, the AMF may perform a procedure for selecting a new LMF based on location information and TA information of the corresponding terminal. In this case, the AMF may perform step 7 and step 9.

7. The AMF may transmit a notification message (e.g., Namf_communication_N1N2messagenotify) including a user plane connection establishment reject, the address, and the cause to an LMF1.

For example, when the LMF receives the cause, the LMF may help another network entity such as the AMF, a GMLC, or an NWDAF request to select an LMF2 having an address different from an address of the LMF1.

Alternatively, one or more LMFs to which the terminal is connectable may exist. In this case, the terminal may request a "User plane Connection establishment command" to a newly selected LMF to establish a new connection using an LMF LCS-UP address corresponding to the corresponding LMF.

8. The LMF1 may transmit an analytics request message (e.g., Nnwdaf_analyticsinfo_request) to an NWDAF. Here, the analytics request message may be a request to analyze information for finding an optimal LMF to the NWDAF. The analytics request message may include the cause received in step 7.

9. The AMF may transmit a message (e.g., Nnwdaf_analyticsinfo_request) to the NWDAF. Here, the analytics request message may be a request to analyze information for finding an optimal LMF to the NWDAF. The analytics request message may include the cause transmitted in step 7.

The NWDAF may receive or collect first location information from the LMF. For example, the first location information may be location information of the terminal possessed by the LMF. The NWDAF may receive or collect second location information from the AMF. The second location information may be location information of the terminal possessed by the AMF. For example, the second location information may include cell information of the terminal, TA information, and/or information related to whether the terminal is in an allowed area.

In step 8 or step 9, the NWDAF may receive an analytics request message including information related to the UE from the AMF and/or the LMF. In this case, the NWDAF may analyze the first location information and/or the second location information, and may transmit an analysis result message to the AMF and/or the LMF. For example, the analysis result message may include information indicating that the LMF1 may not be used and information related to a reason why the LMF1 may not be used. The analysis result message may also include information related to another LMF other than the LMF1. Based on the analysis result message, the AMF may select a new LMF.

For example, when an existing tracking area id of a corresponding UE is changed, and when a corresponding tracking area id does not belong to an allowed area of the terminal (e.g., when the tracking area id becomes a temporary rejected tracking area), the NWDAF may inform the AMF of LMF information to which the terminal is connectable and location information of the terminal. Alternatively, when the terminal receives a User plane Connection establishment command from the LMF and informs the LMF of a response thereto, the terminal may inform the LMF of cause information together. In this case, the terminal may inform the AMF of LMF information to which the terminal is connected or to be connected together.

Based on the information transmitted by the NWDAF, when one or more LMFs are available to the AMF, it may be helpful for the AMF to select an optimal LMF to be used by the terminal. That is, the AMF may select a new LMF based on the information of the NWDAF.

For example, the terminal may determine to generate a user plane connection establishment command based on another address in a URSP. For example, the terminal may use another PDU session in the URSP, or another LMF address based on an operator policy using a stored value of the terminal may be used.

For example, based on an operator policy, the AMF may select another LMF for the UE.

The following drawings are prepared to describe a specific example of the present specification. Since specific names of devices or specific names of signals/messages/fields described in the drawings are provided as examples, technical features of the present specification are not limited to the specific names used in the following drawings.

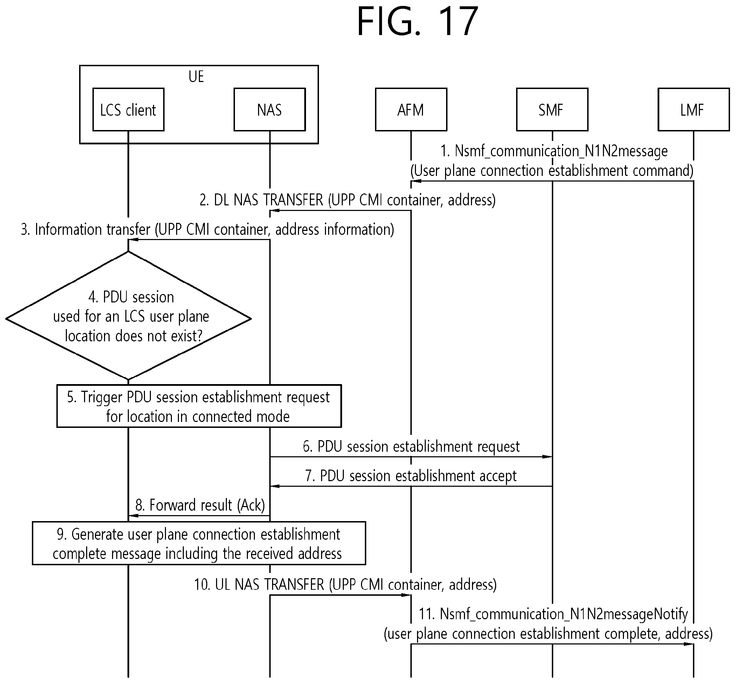

**FIG. 17** **is a fourth example of a procedure according to an embodiment of the present disclosure.**
1. An LMF may transmit a message (including a user plane connection establishment command) based on a Namf_Communication_N1N2message service operation to an AMF.
2. The AMF may transmit a DL NAS TRANSFER message to a UE. The DL NAS TRANSFER message may include a UPP CMI container and an address. Here, the address may mean an address of the LMF.
3. A NAS of the UE may deliver a message to an LCS client of the UE. For example, delivered information may include the UPP CMI container and address information.
   For example, a terminal may receive a DL NAS TRANSFER message with a payload container type of a "UPP-CMI container" from the AMF.
4. The terminal may determine whether a PDU session used for an LCS user plane location does not exist. For example, the terminal may determine that an establishment of a PDU session mapped to a received address is required.
5. In a connected mode, the terminal may trigger a PDU session establishment request for a location. For example, when an establishment of a PDU session mapped to a received LMF LCS-UP address is required, the terminal may trigger a PDU session establishment request. At this time, the terminal may trigger an establishment of a PDU session based on an address received from an NW.
6. The UE may transmit a PDU session establishment request message to an SMF.
7. The SMF may transmit a PDU session establishment accept message to the UE.
8. A NAS of the terminal may deliver a result (Ack) to the LCS client. For example, when the terminal receives a PDU session establishment accept message, the NAS of the terminal may inform an upper layer that a PDU session establishment is successfully completed.
9. An LMF of the terminal may generate a "user plane connection establishment complete" message including the received address, and may deliver the message to the NAS of the terminal.
   To transmit this, the terminal NAS may put a corresponding message in a UPP-CMI container through a UL NAS Transfer message and may deliver the message. At this time, the terminal may inform address information of which a connection establishment is completed together. Alternatively, the terminal may inform the NW through a 1-bit indicator whether the corresponding address is an address informed by the NW or an address of a PDU session corresponding to LCS user plane positioning in a URSP of the terminal.
10. The terminal may transmit a UL NAS TRANSFER message to the AMF.
   For example, the UL NAS TRANSFER message may include the UPP CMI container and the address.
11. The AMF may transmit a notification message (e.g., Namf_communication_N1N2messagenotify) including a user plane connection establishment complete and the address to an LMF1.

The following drawings are prepared to describe a specific example of the present specification. Since specific names of devices or specific names of signals/messages/fields described in the drawings are provided as examples, technical features of the present specification are not limited to the specific names used in the following drawings.

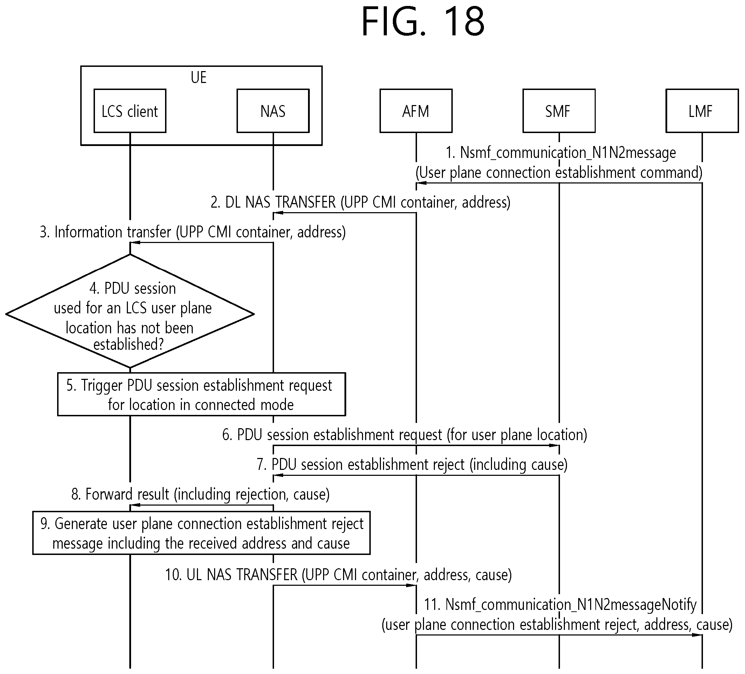

**FIG. 18** **is a fifth example of a procedure according to an embodiment of the present disclosure.**

1~5. Steps 1 to 5 of FIG. 17 may be performed in the same manner.

6. A UE may transmit a PDU session establishment request message to an SMF. The PDU session establishment request message may be a message requesting a PDU session for a user plane location (or positioning).

7. The SMF may transmit a PDU session establishment reject message to the UE. The PDU session establishment reject message may include a cause.

8. A NAS of the UE may deliver a result to an LCS client. The result may include reject information and a cause.

For example, if a terminal receives a reject for a corresponding PDU session establishment request from the SMF, a terminal NAS may inform an upper layer of a failure of a PDU session establishment and a cause of the failure together.

9. The UE may generate a user plane connection establishment complete message including a received address and a cause.

An upper layer (e.g., an LCS client of the terminal) of the terminal may generate and deliver a "user plane connection establishment reject" message. At this time, the terminal may inform reject cause information received from the terminal NAS together.

For example, a terminal LMF (e.g., the LCS client of the terminal) may generate a separate cause value used in an LMF based on the corresponding cause. The terminal LMF (e.g., the LCS client of the terminal) may generate a separate cause value by mapping the received cause information. In addition, the terminal LMF (e.g., the LCS client of the terminal) may inform an NW through a 1-bit indicator whether an address related to a reject is an address informed by the NW or an address of a PDU session corresponding to LCS user plane positioning in a URSP of the terminal.

10. The terminal may transmit a UL NAS TRANSFER message to an AMF.

For example, the UL NAS TRANSFER message may include a UPP CMI container, an address, and a cause. For example, the cause here may be a cause why a user plane connection establishment is rejected.

When a UL NAS Transfer message includes a payload container type of a UPP-CMI container and a reject cause, the AMF may newly select an LMF related to the corresponding terminal based on location information and TA information of the corresponding terminal.

11. The AMF may transmit a notification message (e.g., Namf_communication_N1N2messagenotify) including a user plane connection establishment reject, an address, and a cause to the LMF.

When the LMF receives the cause and a "user plane connection establishment reject" message, the LMF may request another network entity (e.g., an AMF, a GMLC, or an NWDAF) to select an LMF with another address.

Alternatively, when one or more LMF LCS-UP addresses transmittable to the LMF exist, the LMF may request a "User plane Connection establishment command" message having a new address to establish a connection using another LMF LCS-UP address in the same LMF.

Alternatively, one or more LMFs to which the terminal is connectable may exist. In this case, the terminal may request a "User plane Connection establishment command" to a newly selected LMF to establish a new connection using an LMF LCS-UP address corresponding to the corresponding LMF.

In addition, an NWDAF may receive such information from the AMF and/or the LMF, and may help select an optimal LMF.

The following drawings are prepared to describe a specific example of the present specification. Since specific names of devices or specific names of signals/messages/fields described in the drawings are provided as examples, technical features of the present specification are not limited to the specific names used in the following drawings.

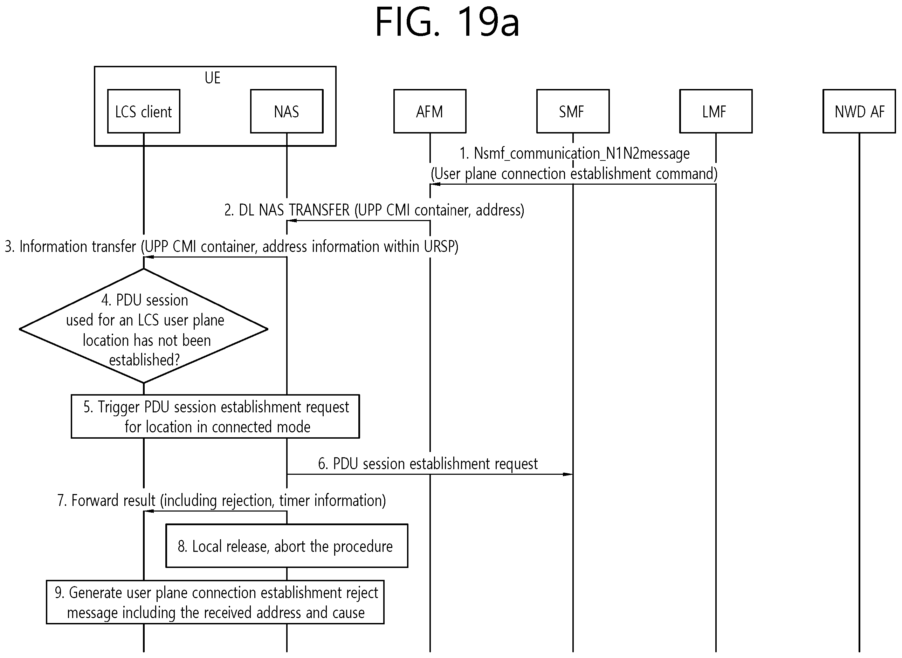

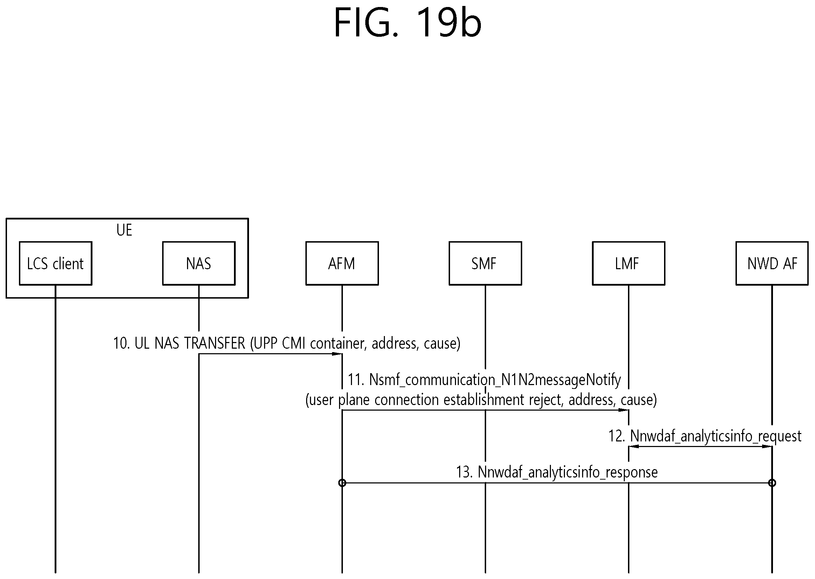

**FIGS. 19a** **and** **19b** **are a sixth example of a procedure according to an embodiment of the present disclosure.**

1~5. Steps 1 to 5 of FIG. 17 may be performed in the same manner.

6. A UE may transmit a PDU session establishment request message to an SMF.

7. A NAS of the UE may deliver a result (including a reject and timer information) to an LCS client of the UE.

For example, a terminal may not receive a response to a corresponding PDU session establishment request from the SMF for a certain time or more. In this case, a terminal NAS may inform an upper layer of a continuous failure of a PDU session establishment. The terminal NAS may abort the corresponding PDU session establishment procedure.

8. The NAS of the UE may perform a local release, and may abort the procedure.

9. The UE may generate a user plane connection establishment reject message including a received address and a cause.

For example, an upper layer (e.g., the LCS client of the terminal) of the terminal may generate and deliver a "user plane connection establishment reject" message. At this time, the terminal may inform new reject cause information (e.g., an "unreachable UE") together. In addition, the terminal may inform an NW through a 1-bit indicator whether an address related to a PDU session in which a reject occurs is an address informed by the NW or an address of a PDU session corresponding to LCS user plane positioning in a URSP of the terminal.

10. The UE may transmit a UL NAS TRANSFER message to an AMF. The UL NAS TRANSFER message may include a UPP CMI container, the address, and the cause.

When a UL NAS Transfer message includes a payload container type of a UPP-CMI container and a reject cause, the AMF may newly select an LMF related to the corresponding terminal based on location information and TA information of the corresponding terminal.

11. The AMF may transmit a notification message (e.g., Namf_communication_N1N2messagenotify) including a user plane connection establishment reject, the address, and the cause to the LMF.

12. The LMF may transmit an analytics request message (e.g., Nnwdaf_analyticsinfo_request) to an NWDAF. Here, the analytics request message may be a request to analyze information for finding an optimal LMF to the NWDAF. The analytics request message may include the cause received in step 11.

When the LMF receives the cause and a "user plane connection establishment reject" message, the LMF may request another network entity (e.g., the AMF, a GMLC, or the NWDAF) to select an LMF with another address.

13. The AMF may transmit a message (e.g., Nnwdaf_analyticsinfo_request) to the NWDAF. Here, the analytics request message may be a request to analyze information for finding an optimal LMF to the NWDAF. The analytics request message may include the cause transmitted in step 11.

Alternatively, one or more LMFs to which the terminal is connectable may exist. In this case, the terminal may request a "User plane Connection establishment command" to a newly selected LMF to establish a new connection using an LMF LCS-UP address corresponding to the corresponding LMF.

In addition, the NWDAF may receive such information from the AMF and/or the LMF, and may help select an optimal LMF.

The following drawings are prepared to describe a specific example of the present specification. Since specific names of devices or specific names of signals/messages/fields described in the drawings are provided as examples, technical features of the present specification are not limited to the specific names used in the following drawings.

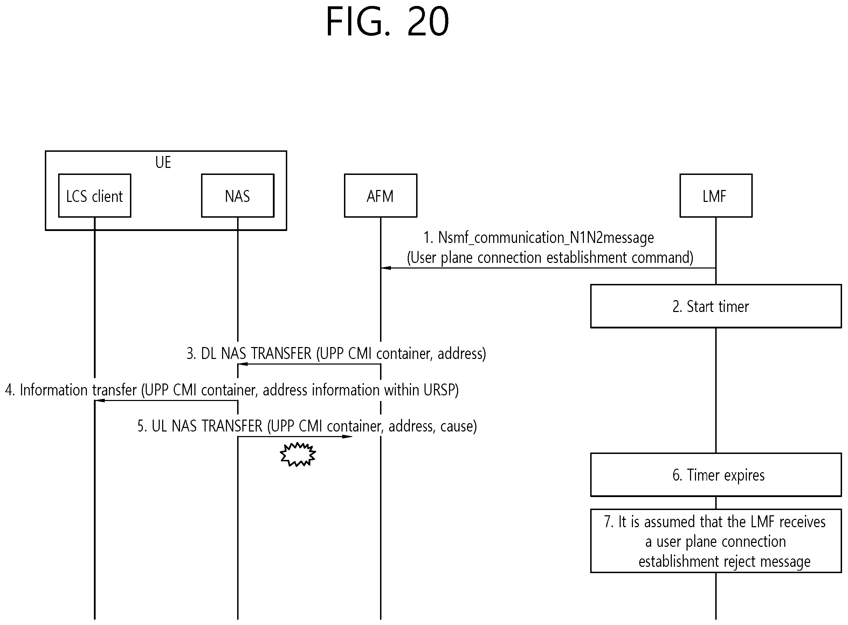

**FIG. 20** **is a seventh example of a procedure according to an embodiment of the present disclosure.**
1. An LMF may transmit a message (including a user plane connection establishment command) based on a Namf_Communication_N1N2message service operation to an AMF.
2. The LMF may start a timer when or after transmitting the message in step 1.
   For example, the LMF may request a user plane connection establishment command to the AMF, and may not receive a response thereto. When the LMF transmits the user plane connection establishment command, the LMF may start a timer for the user plane connection establishment command.
3. The AMF may transmit a DL NAS TRANSFER message to a UE. The DL NAS TRANSFER message may include a UPP CMI container and an address. Here, the address may mean an address of the LMF.
4. A NAS of the UE may deliver information to an LCS client of the UE. For example, the delivered information may include the UPP CMI container and address information.
   For example, a terminal may receive a DL NAS TRANSFER message with a payload container type of a "UPP-CMI container" from the AMF.
5. The UE may fail to transmit a UL NAS TRANSFER message. Alternatively, the UE may transmit the UL NAS TRANSFER message to the AMF, but the AMF may fail to transmit the message to the LMF.
6. The timer may expire.
7. The LMF may assume that a user plane connection establishment reject message is received.

For example, the LMF may not receive any response such as a "user plane connection establishment complete" or a "user plane connection establishment reject" from the terminal until the timer expires. In this case, the LMF may assume that the LMF receives an "unspecified" cause or an "unreachable UE" cause and a "user plane connection establishment reject" from the terminal. Here, the cause may reuse an existing cause, or may be a newly defined cause.

In addition to the examples of FIGS. 13 to 20, various examples of the present disclosure may be described.

For example, a PDU session related to the address received by the terminal may not exist, and an address (e.g., an LMF LCS-UP address) received from the AMF may not exist. In this case, the terminal may perform a PDU session establishment procedure for a PDU session of which a connection capability type is "LCS user planning positioning" in a Route Selection Description (RSD) in a URSP (UE Route Selection Policy) stored in the terminal. This may mean that the terminal uses a stored value without receiving the LMF address from the AMF. At this time, the terminal may have one or more "LCS user planning positioning" connection capability types in the RSD in the URSP of the terminal. In this case, the terminal may have an IP address and an FQDN stored in a traffic descriptor of a URSP rule in the URSP, and in this case, the terminal may use the address in the stored URSP. At this time, when the terminal has a plurality of URSP rules, the terminal may perform a PDU session establishment procedure for a PDU session having a high priority according to a URSP priority.

The terminal may transmit a PDU session establishment request message for the PDU session related to "LCS user planning positioning" in the URSP. In this case, in the procedures 3) to 6) in the examples of FIGS. 17 to 20 described above, a PDU session related to the PDU session establishment request may be related to the following address. For example, this PDU session may have an address mapped to a PDU session of which a connection capability type is "LCS user planning positioning" in a Route Selection Description (RSD) in the URSP.

Hereinafter, an example to which various examples of the present disclosure are applied may be described.

According to the example of FIG. 12 described above, the UE may configure a payload container type to a "UPP-CMI container", and may include a "user plane positioning acknowledge" in the payload container in a UL NAS TRANSPORT message to indicate that an utilization of a user plane connection for an LCS-UPP succeeds or to inform that an utilization of the user plane connection for the LCS-UPP fails.

Based on a definition of a coding part of a message,
1) An acknowledge for a user plane connection configuration command may be a user plane connection configuration complete message.
2) A reject message for the user plane connection configuration command may be a user plane connection configuration reject message.

The user plane connection configuration complete message may be transmitted by the UE to the LMF. The user plane connection configuration complete message may be an acknowledge message for an establishment command message received from the LMF. Reference may be made to Table 3.

A user plane connection establishment reject message may be transmitted by the UE to the LMF. The user plane connection establishment reject message may be transmitted to reject the establishment command message received from the LMF.

The following drawings are prepared to describe a specific example of the present specification. Since specific names of devices or specific names of signals/messages/fields described in the drawings are provided as examples, technical features of the present specification are not limited to the specific names used in the following drawings.

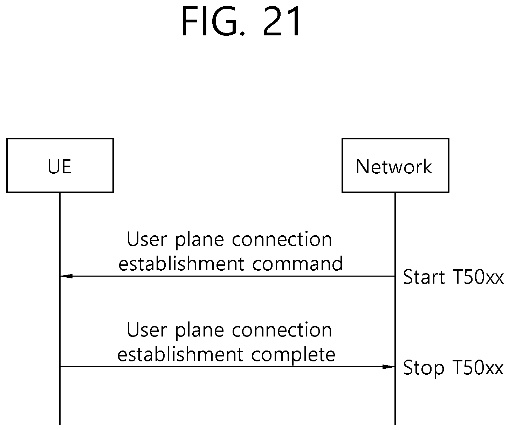

**FIG. 21** **is an example of a user plane connection establishment command procedure according to an embodiment of the present disclosure.**

FIG. 21 may be an example of a user plane connection establishment command procedure initiated by an LMF.

With reference to FIG. 21, an example of a start of a user plane connection information provisioning procedure by the LMF may be described.

According to the example of FIG. 21, a network may transmit a user plane connection establishment command message to a UE. The network may start a timer T50xx. The UE may transmit a user plane connection establishment complete message to the network. The network may stop the timer T50xx.

The LMF may start a user plane connection establishment procedure by transmitting a user plane connection establishment command message to the UE as shown in FIG. 21. The LMF may perform the following operations:
a) The LMF may generate a user plane connection establishment command message;
b) The LMF may transmit a user plane connection release command message to the UE; and
c) The LMF may transmit the user plane connection establishment command message, and may start the timer T50xx.

An example of user plane connection information accepted by the UE may be described.

When the UE receives the user plane connection establishment command message from the LMF, the UE may determine an LMF LCS-UP address to be established.

When the LMF LCS-UP address is received, the UE may check whether a PDU session corresponding to the received address is currently configured, and whether the corresponding PDU session is established. When the PDU session is already established, the UE may select the received address as the LMF LCS-UP address received from the LMF.

When there is no service restriction on an S-NSSAI mapped to the PDU session for user plane positioning, the UE may transmit a user plane connection establishment complete message including LMF LCS-UP address information (or an indication) set to 0.

When there is a service restriction on the S-NSSAI mapped to the PDU session for the user plane positioning, the UE may transmit a USER PLANE CONNECTION ESTABLISHMENT REJECT including a cause value (e.g., #28 restricted service area) and LMF LCS-UP address information (or an indication) set to 0.

When the LMF LCS-UP address is not received, the UE may preferentially use a PDU session having an "LCS user plane positioning" connection capability type in Route selection descriptors of a URSP rule, and may use information indicating that a PDU session should be triggered.

When there is no PDU session mapped to LCS user plane positioning, the UE may request a PDU session trigger to a lower layer of the UE.

When the lower layer of the UE indicates a result of the PDU session requested for the LCS user plane positioning, the UE may transmit a confirmation to the LMF.

The lower layer of the UE may indicate that a PDU session establishment accept message for the LCS user plane positioning is successfully received. In this case, the UE may generate a USER PLANE CONNECTION ESTABLISHMENT COMPLETE message and may transmit the USER PLANE CONNECTION ESTABLISHMENT COMPLETE message to the LMF.

After the lower layer of the UE receives a PDU session establishment reject message including a reject cause, it may indicate a failure of a PDU session establishment procedure for the LCS user plane positioning. In this case, the UE may generate a user plane connection establishment reject message including the reject cause, and may transmit the user plane connection establishment reject message to the LMF.

The lower layer of the UE may indicate a failure in the PDU session establishment procedure for the LCS user plane positioning due to an abnormal case (e.g., a 5th expiration of T3580). In this case, the UE may generate a USER PLANE CONNECTION ESTABLISHMENT REJECT message including an "unreachable user plane positioning" reject cause, and may transmit it to the LMF. A terminal may transmit a "USER PLANE CONNECTION ESTABLISHMENT REJECT" message including the "unreachable user plane positioning" reject cause to the LMF. In this case, a plurality of connectable LMFs may exist, but a connection reject occurs upon a user plane connection using a currently connected LMF, and when the terminal connects a user plane using another possible LMF, a connection access may be possible. In this case, the terminal may transmit a reject cause (e.g., it is impossible for the terminal to establish a user plane connection to a corresponding LMF) to the LMF. The LMF may provide the reject cause to an NWDAF. Then, the NWDAF may analyze this information, analyze information on whether it is possible for another LMF to establish a user plane connection, and the NWDAF may inform an AMF to select another LMF.

In other words, the UE may not accept user plane connection information with the corresponding connected LMF. In this case, the UE may transmit a user plane connection establishment reject message to the LMF together with a reject cause. Using this reject cause, the LMF may provide information to the NWDAF. The NWDAF may analyze the information, and the AMF may use this information to select another LMF.

An example of an abnormal case on a network side may be described. It may be identified as the following abnormal case: T50xx timeout. In this case, the LMF may consider that a user plane connection establishment reject is received with a cause value of an unreachable user plane positioning.

An example of a UPP-CM message may be described. The UPP-CM message may include a user plane connection establishment complete message.

A definition of the user plane connection establishment complete message is as follows. To acknowledge an establishment command received by the UE from the LMF, a user plane connection complete message may be transmitted to the LMF. Table 3 may be referred to.
Message type: User plane connection establishment complete
Significance: dual
Direction: UE to network

**[Table 3]**

| IEI | Information Element | Type/Reference | Presence | Format | Length |
|---|---|---|---|---|---|
| | User plane connection establishment complete message | Message type Reference TS24.572 V18.4.0 S11.2.3 | M | V | 1 |
| | LMF LCS-UP address indication | LMF LCS-UP address indication | O | TV | 1 |

An example of Table 3 may be content of a user plane connection establishment complete message.

An example of an LMF LCS-UP address indication may be described.

The LMF LCS-UP address indication may be included to indicate whether a user plane positioning address of the LMF is used as a PDU session corresponding to an "LCS user plane positioning" connection capability type of an RSD in a URSP stored in the UE or as a PDU session corresponding to an LMF LCS-UP address receiving a user plane connection establishment command message from the LMF.

### 10.3.3 User plane connection establishment reject

An example of a user plane connection establishment reject may be described.

A definition of the user plane connection establishment reject is as follows. To reject an establishment command received by the UE from the LMF, a user plane connection reject message may be transmitted to the LMF. Table 4 may be referred to.
Message type: User plane connection establishment reject
Significance: dual
Direction: UE to network

**[Table 4]**

| IEI | Information Element | Type/Reference | Presence | Format | Length |
|---|---|---|---|---|---|
| | User plane connection establishment reject message | Message type Reference TS24.572 V18.4.0 S11.2.3 | M | V | 1 |
| | LMF LCS-UP address indication | LMF LCS-UP address indication | O | TV | 1 |
| | rejection cause | 5GMM cause | O | TV | 1 |

An example of Table 4 may be content of a user plane connection establishment reject message.

For a 5GMM cause, reference may be made to S9.11.3.2 of 3GPP TS 24.501 V18.4.0.

An example of an LMF LCS-UP address indication may be described.

A purpose of an LMF LCS-UP address indication information element may be to indicate whether a user plane positioning address of an LMF is used as a PDU session corresponding to an "LCS user plane positioning" connection capability type (e.g., defined in 3GPP TS 24.526 V18.4.0) of an RSD in a URSP stored in a UE or as an LMF LCS-UP address corresponding to a PDU session receiving a user plane connection establishment command message from the LMF.

The Network slicing indication information element is coded as shown in Table 5 and Table 6.

A network slicing indication information element may be coded as shown in Table 5 and Table 6.

The LMF LCS-UP address indication may be a type 1 information element.

**[Table 5]**

| 8 | 7 | 6 | 5 | 4 | 3 | 2 | 1 | |
|---|---|---|---|---|---|---|---|---|
| LMF LCS-UP address indication IEI | | | | 0 Spare | 0 Spare | 0 Spare | LLUAI | octet 1 |

Table 5 shows an example of an LMF LCS-UP address indication.

**[Table 6]**

| LMF LCS-UP address indication (LLUAI) (octet 1, bit 1) | |
|---|---|
| Bit | |
| 1 | |
| 0 | An LMF LCS-UP address may be used as an "LCS user plane positioning" connection capability type (defined in 3GPP TS 24.526 V18.4.0) of an RSD in a URSP stored in a UE corresponding to a PDU session. |
| 1 | An LMF LCS-UP address may be used for an LMF LCS-UP address received from an LMF corresponding to a PDU session. |

The example of Table 6 is an example of an LMF LCS-UP address indication.

The following drawings are prepared to describe a specific example of the present specification. Since specific names of devices or specific names of signals/messages/fields described in the drawings are provided as examples, technical features of the present specification are not limited to the specific names used in the following drawings.

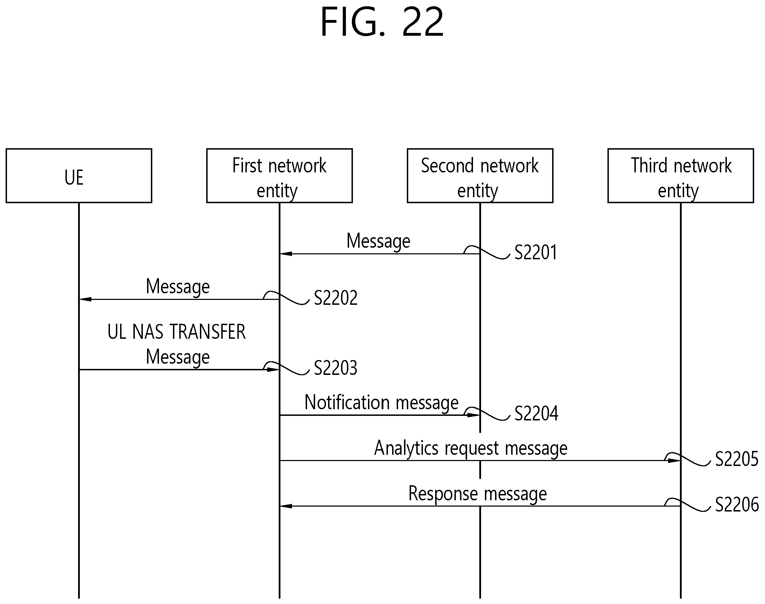

**FIG. 22** **illustrates an example of a procedure performed according to an embodiment of the present disclosure.**

For reference, the procedure illustrated in FIG. 22 is merely an example, and the scope of the present disclosure is not limited by the example of FIG. 22.

For example, the operations described in the examples of FIGS. 1 to 21 may also be applied to the example of FIG. 22. For example, even if an operation, content, etc. is not directly described in the example of FIG. 22, the operation, content, etc. described in various examples of the present disclosure may be applied.

In the example of FIG. 22, the first network entity may be a network entity related to mobility (e.g., an AMF). The second network entity may be a network entity related to a location (e.g., an LMF). The third network entity may be a network entity related to analytics (e.g., an NWDAF).

In step S2201, the second network entity may transmit a message to the first network entity.

For example, the message may include information related to a user plane connection and an address related to the second network entity.

For example, the address may be a Location Management Function (LMF) Location Services (LCS)-User Plane (UP) address.

In step S2202, the first network entity may transmit a message to a UE. For example, the message may include the information related to the user plane connection and the address.

In step S2203, the UE may transmit a UL NAS TRANSFER message to the first network entity.

For example, the UL NAS TRANSFER message may include a reject cause.

For example, the reject cause may be a cause related to a service area restriction.

For example, the UL NAS message may include the reject cause and a payload container type that is User Plane Protocol-Control and Management Information (UPP-CMI).

In step S2204, the first network entity may transmit a notification message to the second network entity.

For example, the notification message may include the reject cause.

For example, the notification message may cause the second network entity to transmit an analytics request message including the reject cause to the third network entity.

In step S2205, the first network entity may transmit an analytics request message to the third network entity.

For example, the analytics request message may include the reject cause.

For reference, the third network entity may receive a subscription message including notification information related to a reject of the UE related to the user plane connection from the first network entity.

For reference, the third network entity may receive an analytics request message including an ID of the second network entity and a reject cause of a User Equipment (UE) related to the user plane connection from the second network entity.

In step S2206, the third network entity may transmit a response message to the first network entity.

For example, the response message may be an analytics response message. The response message may include information related to another network entity related to a location.

For reference, the third network entity may transmit an analytics response message including the information related to another network entity related to the location to the first network entity and/or the second network entity.

For example, the first network entity may select a fourth network entity related to a location based on the information related to another network entity related to the location.

For example, the first network entity may select the fourth network entity related to the location based on one or more of the information related to another network entity related to the location, location information of the UE, and Tracking Area (TA) information of the UE.

According to an embodiment of the present disclosure, when a terminal cannot configure a user plane connection based on a user plane connection establishment, the terminal may inform an LMF of a reject cause for not being able to configure the establishment.

According to an embodiment of the present disclosure, the LMF and/or an NWDAF may inform an AMF of information related to selecting a new LMF. The AMF may select the new LMF based on the information received from the LMF and/or the NWDAF.

The present specification may have various effects.

According to an embodiment of the present disclosure, a location service for a terminal may be effectively supported. For example, a location service based on a user plane may be effectively supported.

For example, by defining an operation for supporting a new user plane connection establishment, stability of a protocol may be guaranteed.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of a terminal (e.g., a UE, a relay UE, a vehicle relay UE, MWAB-UE, VMR-UE) described in the present disclosure may be implemented by the devices of FIGS. 1 to 3 described above. For example, the terminal(e.g., UE) may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal (e.g., UE) described in the present disclosure.

Additionally, instructions for performing operations of the terminal described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, PCF, V-UPF, etc.) or base stations (e.g., NG-RAN, gNB, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method comprising:
receiving, from a first network entity related to a location, a message including information related to a user plane connection and an address related to the first network entity;
transmitting, to a User Equipment (UE), a message including the information related to the user plane connection and the address;
receiving, from the UE, a UL NAS TRANSFER message including a reject cause;
transmitting, to the first network entity, a notification message including the reject cause;
transmitting, to a second network entity related to analytics, an analytics request message including the reject cause; and
receiving, from the second network entity, an analytics response message including information related to another network entity related to a location.

2. The method of claim 1,
wherein the address is a Location Management Function (LMF) Location Services (LCS) - User Plane (UP) address.

3. The method of claim 1 or 2,
wherein the reject cause is a cause related to a service area restriction.

4. The method of any one of claims 1 to 3,
wherein the UL NAS TRANSFER message includes the reject cause and a payload container type that is User Plane Protocol - Control and Management Information (UPP-CMI).

5. The method of any one of claims 1 to 4, further comprising:
selecting a third network entity related to a location based on the information related to another network entity related to the location.

6. The method of any one of claims 1 to 5,
wherein the third network entity is selected based on one or more of the information related to another network entity related to the location, location information of the UE, or Tracking Area (TA) information of the UE.

7. The method of any one of claims 1 to 6,
wherein the notification message causes the first network entity to transmit an analytics request message including the reject cause to the second network entity.

8. An apparatus comprising:
at least one transceiver;
at least one processor; and
at least one memory storing instructions and operably connectable to the at least one processors,
wherein operations performed based on the instructions being executed by the at least one processor comprise the method according to any one of claims 1 to 7.

9. A method comprising:
receiving, from a first network entity related to a location, an analytics request message including an ID of a second network entity related to mobility and a reject cause of a User Equipment (UE) related to a user plane connection;
receiving, from the second network entity, an analytics request message including the reject cause; and
transmitting, to the first network entity and/or the second network entity, an analytics response message including information related to another network entity related to a location.

10. The method of claim 9,
wherein the information related to another network entity related to the location causes the second network entity to select a third network entity related to a location from an Access and Mobility Management Function (AMF).

11. The method of claim 9 or 10, further comprising:
receiving, from the second network entity, a subscription message including notification information related to a reject of the UE related to the user plane connection.

12. The method of any one of claims 9 to 11,
wherein the reject cause is a cause related to a service area restriction.

13. An apparatus comprising:
at least one transceiver;
at least one processor; and
at least one memory storing instructions and operably connectable to the at least one processor,
wherein operations performed based on the instructions being executed by the at least one processor comprise the method according to any one of claims 9 to 12.
